(19) Europäisches Patentamt
European Patent Office
Office européen des brevets

(11) **EP 2 847 129 B1**

(12) **EUROPÄISCHE PATENTSCHRIFT**

(45) Veröffentlichungstag und Bekanntmachung des Hinweises auf die Patenterteilung:
**06.01.2021   Patentblatt 2021/01**

(21) Anmeldenummer: **13713123.1**

(22) Anmeldetag: **19.03.2013**

(51) Int Cl.:
*C01B 21/064* (2006.01)        *C08K 3/38* (2006.01)
*C04B 35/583* (2006.01)       *C09C 1/00* (2006.01)
*C04B 35/581* (2006.01)       *C04B 35/626* (2006.01)
*C04B 35/63* (2006.01)        *C04B 35/65* (2006.01)

(86) Internationale Anmeldenummer:
**PCT/EP2013/055724**

(87) Internationale Veröffentlichungsnummer:
**WO 2013/167306 (14.11.2013 Gazette 2013/46)**

(54) **BORNITRID-AGGLOMERATE, VERFAHREN ZU DEREN HERSTELLUNG UND DEREN VERWENDUNG**

BORON NITRIDE AGGLOMERATES, METHOD FOR THE PRODUCTION THEREOF AND USAGE THEREOF

AGGLOMÉRATS DE NITRURE DE BORE, LEUR PROCÉDÉ DE PRODUCTION ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2012   DE 102012104049**

(43) Veröffentlichungstag der Anmeldung:
**18.03.2015   Patentblatt 2015/12**

(73) Patentinhaber: **3M Innovative Properties Company**
**St. Paul, MN 55133-3427 (US)**

(72) Erfinder:
• **ENGLER, Martin**
  **87439 Kempten (DE)**
• **UIBEL, Krishna**
  **87448 Waltenhofen (DE)**

(74) Vertreter: **Mössner, Brigitte**
**3M Deutschland GmbH**
**Office of Intellectual Property Counsel (PC 072P)**
**Carl-Schurz-Strasse 1**
**41453 Neuss (DE)**

(56) Entgegenhaltungen:
WO-A1-03/013845        WO-A2-2006/023860
US-A1- 2006 127 422    US-A1- 2010 226 095
US-A1- 2012 046 387

**Beschreibung**

Gebiet der Erfindung

Die vorliegende Erfindung betrifft Bornitrid-Agglomerate bzw. Agglomerate auf Basis von Bornitrid, umfassend hexagonales Bornitrid, ein Verfahren zu deren Herstellung sowie die Verwendung solcher Agglomerate als Füllstoff für Polymere zur Herstellung von Polymer-Bornitrid-Verbundwerkstoffen.

Hintergrund der Erfindung

Hexagonales Bornitrid-Pulver kann aufgrund seiner guten Wärmeleitfähigkeit als Füllstoff für Polymere verwendet werden bei Anwendungen, bei denen gleichzeitig eine gute elektrische Isolationsfähigkeit des eingesetzten Füllstoffs erforderlich ist. Weiterhin wird Bornitrid-Pulver auch als Sinterpulver zum Heißpressen eingesetzt für Anwendungen in der Metallurgie. Außerdem wird hexagonales Bornitrid-Pulver eingesetzt in kosmetischen Zubereitungen, als Schmierstoff, als Trennmittel in der Metallurgie sowie als Rohstoff zur Herstellung von kubischem Bornitrid.

Hexagonales Bornitrid-Pulver wird technisch durch Nitridierung von Borsäure in Anwesenheit einer Stickstoffquelle synthetisiert. Als Stickstoffquelle kann Ammoniak eingesetzt werden, wobei dann üblicherweise Calciumphosphat als Trägermaterial für die Borsäure eingesetzt wird. Auch eine organische Stickstoffquelle wie Melamin oder Harnstoff kann unter Stickstoff mit Borsäure oder Boraten umgesetzt werden. Die Nitridierung wird üblicherweise bei Temperaturen von 800 bis 1200°C durchgeführt. Das dabei erhaltene Bornitrid ist weitgehend amorph, es wird auch als turbostratisches Bornitrid bezeichnet. Aus dem amorphen Bornitrid wird bei höheren Temperaturen bis etwa 2100°C vorzugsweise in einer Stickstoffatmosphäre hexagonales, kristallines Bornitrid hergestellt. Oftmals werden für diese Hochtemperaturbehandlung zum amorphen Bornitrid noch Kristallisationszusätze zugefügt.

Bei der Hochtemperaturbehandlung entsteht das hexagonale Bornitrid (hBN) in Form von Primärpartikeln einer plättchenförmigen Morphologie. Typische Plättchengrößen liegen im Bereich von ca. 1 bis 20 $\mu$m, aber auch Plättchengrößen bis zu 50 $\mu$m und mehr sind möglich. Üblicherweise wird das Glühgut nach der Herstellung aufgemahlen bzw. entagglomeriert, um verarbeitungsfähige Pulver zu erhalten.

Die Wärmeleitfähigkeit des hexagonalen Bornitrids ist in der Plättchenebene (a-Achse) größer als senkrecht dazu (c-Achse). In Richtung der c-Achse beträgt die Wärmeleitfähigkeit 2,0 W/mK, in Richtung der a-Achse hingegen 400 W/mK (siehe R. F. Hill, SMTA National Symposium "Emerging packaging Technologies", Research Triangle Park, N.C., Nov. 18-21, 1996).

Neben plättchenförmigen Bornitrid-Primärpartikeln bzw. Agglomeraten solcher Primärpartikel, die bei der Synthese von hexagonalem Bornitrid anfallen, wird hexagonales Bornitrid-Pulver für Füllstoff-Anwendungen auch oft in Form von gezielt hergestellten Granulaten eingesetzt, d.h. in Form von aus den Primärpartikeln aufgebauten Sekundärpartikeln. Durch die Granulation werden die Verarbeitungseigenschaften, wie etwa die Rieselfähigkeit und die Dosierbarkeit, des Bornitrid-Pulvers verbessert und es können höhere Füllgrade und höhere Wärmeleitfähigkeiten beispielsweise in Polymer-Bornitrid-Verbundwerkstoffen erzielt werden. Dabei gibt es verschiedene Verfahren zur Herstellung solcher Sekundärpartikel, die zu Granulaten mit unterschiedlicher Morphologie und unterschiedlichen Eigenschaften führen.

Für die gezielt hergestellten Granulate wird oft auch die Bezeichnung "Agglomerate" verwendet, ebenso wie für die herstellungsbedingt bei der Synthese des hexagonalen Bornitrids anfallenden Agglomerate bzw. Aggregate.

Stand der Technik

Bekannte Methoden zur Herstellung von Granulaten sind die Aufbaugranulation und die Sprühgranulation. Bei der Sprühgranulation wird von einer Suspension von Feststoff in einer Flüssigkeit ausgegangen, welche zu Tröpfchen zerstäubt wird und diese dann anschließend getrocknet werden. Bei der Aufbaugranulation wird zum Feststoff eine geringe Menge Flüssigkeit gegeben, welche aufgrund von Oberflächenbenetzung und Kapillarkräften die Feststoffprimärpartikel agglomeriert, diese Agglomerate werden anschließend getrocknet. Bei beiden Verfahren werden Sekundärpartikel geringer Dichte bzw. hoher Porosität erhalten.

In der US 2006/0 127 422 A1 wird ein Verfahren zur Herstellung kugelförmiger Bornitrid-Agglomerate beschrieben, bei dem plättchenförmiges hexagonales Bornitrid aus einer wässrigen Suspension mit einem organischen Binder sprühgetrocknet wird. Die Sprühtrocknung führt zu kugelförmigen Bornitrid-Granulaten mit einer durchschnittlichen Agglomeratgröße von 1 bis 500 $\mu$m. Das Sprühgranulat ist im Gegensatz zum Ausgangspulver fließfähig. US 2006/0 127 422 A1 offenbart Bornitrid-Agglomerate, umfassend hexagonale Bornitrid-Primärpartikel, wobei die hexagonalen Bornitrid-Primärpartikel miteinander mittels einer anorganischen Bindephase verbunden sind, welche wenigstens ein Oxid, Nitrat, Acetat, Sulfat von Bor, Aluminium, Titan, Zirkon oder Silizium umfasst.

In der WO 03/013 845 A1 ist ein Verfahren zur Herstellung von kugelförmigen Bornitrid-Granulaten beschrieben, bei dem Primärpartikel von hexagonalem Bornitrid mit Zusatz von Polycarbonsäuren, Silanen oder organometallischen Verbindungen sprühgetrocknet und die erhaltenen Sprühgranulate dann bei Temperaturen zwischen 1800 und 2400°C gesintert werden. WO 03/013 845 A1 offenbart h-BN-Agglomerate. Sinterhilfen und Bindephase können vorhanden sein. Geeignete Bindemittel umfassen Polyethylenglykol, Polyvinylalkohol, Glycerin und Latex.

Eine Möglichkeit zur Herstellung von Bornitrid-Granulaten für Füllstoff-Anwendungen ist in US 6,048,511 und EP 0 939 066 A1 beschrieben. Dabei wird hexagonales Bornitrid-Pulver zu Partikeln verarbeitet, deren Größenverteilung sich über einen minimalen Größenbereich von 100 $\mu$m erstreckt, das gemahlene hBN-Pulver wird kalt verpresst, anschließend werden aus dem kalt gepressten Formkörper durch Aufbrechen Granulate hergestellt, und schließlich werden die so entstandenen Granulate gesiebt, um Agglomerate eines gewünschten Größenbereichs zu erhalten. Durch mehrfache Wiederholung der Schritte Aufbrechen und Kaltpressen können Formkörper gepresst werden mit einer Dichte von bis zu 1,91 g/cm$^3$, aus denen durch Aufbrechen Granulate hergestellt werden. Nachteilig an diesem Verfahren ist, dass es sehr aufwändig ist, da zunächst eine spezielle Größenverteilung des Ausgangspulvers eingestellt werden und danach in mehreren Schritten kompaktiert und zerkleinert werden muss.

In der US 2002/0 006 373 A1 werden Briketts aus agglomerierten Bornitrid-Plättchen, die bei der Herstellung des hexagonalen Bornitrids bei der Hochtemperaturbehandlung unter Stickstoff bei 1400 bis 2300°C entstehen, aufgemahlen, wodurch ein Pulver entsteht, das Agglomerate von hexagonalem Bornitrid enthält sowie nicht agglomerierte Bornitrid-Platelets, und anschließend werden die nicht agglomerierten Platelets entfernt, so dass ein Pulver entsteht, das aus Agglomeraten von hexagonalen Bornitrid-Platelets mit einer Agglomeratgrößenverteilung von 10 bis 125 $\mu$m entsteht.

In der US 2004/0 208 812 A1 wird ein Verfahren zur Herstellung eines Bornitrid-Agglomerate enthaltenden Bornitrid-Pulvers beschrieben, bei dem hexagonales Bornitrid mit einer durchschnittlichen Platelet-Größe von mindestens 2 $\mu$m zu Grünkörpern verpresst wird, die Grünkörper dann bei Temperaturen oberhalb 1400°C bis auf Dichten von 1,4 bis 1,7 g/cm$^3$ gesintert und die erhaltenen Sinterkörper anschließend aufgemahlen werden.

In der WO 2005/021 428 A1 wird ein Verfahren zur Herstellung von Bornitrid-Agglomeraten niedriger und mittlerer Dichte beschrieben, bei dem turbostratisches oder hexagonales Bornitrid-Pulver einer Partikelgröße von höchstens 5 $\mu$m einer Temperaturbehandlung oberhalb 1400°C, vorzugsweise 1850 bis 1900°C, unterzogen und anschließend gemahlen wird. Vor der Temperaturbehandlung kann das Bornitrid-Pulver isostatisch zu Formkörpern verpresst und gemahlen werden.
Die entstandenen Agglomerate sind kugel- bis kubusförmig und die Agglomerate haben isotrope Eigenschaften.

In der US 5,854,155 und US 6,096,671 wird ein Verfahren zur Herstellung von aggregierten plättchenförmigen Bornitrid-Partikeln beschrieben, bei dem die Bornitrid-Plättchen in den Aggregaten ohne Binder miteinander verbunden sind. Die Bornitrid-Aggregate sind kiefernzapfenförmig, sie werden bereits bei der Synthese des hexagonalen Bornitrids aus Borsäure, Melamin und Kristallisationskatalysator gebildet.

Den bisher beschriebenen Verfahren zur Herstellung von Bornitrid-Granulaten ist gemeinsam, dass die erzielbare mechanische Stabilität oft nicht ausreichend ist. Daher kann es bei der Verwendung als Füllstoff für Polymere, wie beispielsweise Thermoplaste, Duroplaste und Silikone, infolge von bei der Verarbeitung auftretenden hohen Scherkräften zur teilweisen oder sogar vollständigen Desintegration der Agglomerate kommen, also zum Zerfall der Agglomerate in die Bornitrid-Primärpartikel, aus denen sie aufgebaut sind, d.h. in die einzelnen Bornitrid-Plättchen. Dadurch werden die Wärmeleitpfade, die durch ein intaktes Agglomerat vorgegeben sind, unterbrochen. Es entstehen neue und zahlreiche Wärmeübergänge zwischen fein dispergierten Bornitrid-Füllstoff-Partikeln und Polymer. Mit erhöhter Anzahl an Wärmeübergängen verringert sich die Wärmeleitfähigkeit im Compound. Zudem vergrößert sich die Oberfläche des Füllstoffs beim Zerfall der Agglomerate, so dass die rheologischen Eigenschaften der Compounds so weit verschlechtert werden, dass der erzielbare Füllstoffgehalt im Compound herabgesetzt wird, was die erzielbare Wärmeleitfähigkeit weiter verschlechtert.

Aufgabe der Erfindung

Der Erfindung liegt daher die Aufgabe zugrunde, unter Überwindung der Nachteile des Standes der Technik Bornitrid-Agglomerate mit guter mechanischer Stabilität zur Verfügung zu stellen, insbesondere für Anwendungen als Füllstoff für Polymere.

Weiterhin liegt der Erfindung die Aufgabe zugrunde, ein kostengünstiges, einfaches Verfahren zur Herstellung von Bornitrid-Agglomeraten mit guter mechanischer Stabilität zur Verfügung zu stellen.

Weiterhin liegt der Erfindung die Aufgabe zugrunde, ein alternatives Bornitrid-Agglomerat bereitzustellen.

Zusammenfassung der Erfindung

Die vorstehende Aufgabe wird erfindungsgemäß gelöst durch Bornitrid-Agglomerate gemäß Anspruch 1, ein Verfahren zur Herstellung solcher Bornitrid-Agglomerate gemäß Anspruch 9 sowie einen Polymer-Bornitrid-Verbundwerkstoff gemäß Anspruch 13.

Gegenstand der Erfindung sind somit Bornitrid-Agglomerate, umfassend hexagonale Bornitrid-Primärpartikel, wobei die hexagonalen Bornitrid-Primärpartikel miteinander mittels einer anorganischen Bindephase verbunden sind, und wobei die Bindephase wenigstens ein Nitrid und/oder Oxinitrid der Elemente Aluminium, Silizium und Titan umfasst.

Gegenstand der Erfindung ist ebenso ein Verfahren zur Herstellung solcher Bornitrid-Agglomerate, wobei Bornitrid-Ausgangspulver in Form von Bornitrid-Primärpartikeln mit Bindephasen-Rohstoffen vermischt, zu Granulaten oder Formkörpern verarbeitet und diese anschließend einer Temperaturbehandlung bei einer Temperatur von mindestens 1000°C in einer Nitridieratmosphäre unterzogen und

die erhaltenen Granulate oder Formkörper gegebenenfalls zerkleinert und/oder fraktioniert werden.

Die erfindungsgemäßen Bornitrid-Agglomerate können auch als nitridgebundene Bornitrid-Agglomerate bzw. als Bornitrid-Agglomerate mit nitridischer Bindephase bezeichnet werden.

Gegenstand der Erfindung ist weiterhin ein Polymer-Bornitrid-Verbundwerkstoff, umfassend erfindungsgemäße Bornitrid-Agglomerate.

Die erfindungsgemäßen Agglomerate sind in ihrer Struktur aus vielen einzelnen Bornitrid-Plättchen aufgebaut, die über eine Bindephase miteinander verbunden sind. Die Bindephase umfasst wenigstens ein Nitrid und/oder Oxinitrid.

Die Bornitrid-Plättchen sind in den erfindungsgemäßen Agglomeraten im Wesentlichen ohne Vorzugsrichtung zueinander orientiert, so dass die erfindungsgemäßen Agglomerate weitgehend isotrope Eigenschaften haben.

Die erfindungsgemäßen Agglomerate sind im Unterschied zu nicht agglomerierten Bornitrid-Pulvern rieselfähig und gut dosierbar. Bei gleichem Anteil an Bornitrid können in Bornitrid-Polymer-Verbundwerkstoffen mit den erfindungsgemäßen Agglomeraten höhere Wärmeleitfähigkeitswerte als mit nicht agglomerierten Bornitrid-Pulvern erhalten werden. Mit den erfindungsgemäßen Agglomeraten können höhere Füllgrade in Bornitrid-Polymer-Verbundwerkstoffen als mit nicht agglomerierten Pulvern erhalten werden. Überraschenderweise hat sich gezeigt, dass mit dem erfindungsgemäßen Verfahren Agglomerate guter mechanischer Stabilität hergestellt werden können. Die mechanische Stabilität der Agglomerate ist von Bedeutung, da die Agglomerate das Abfüllen, den Transport, die Dosierung, die Compoundierung und die Formgebung beispielsweise über Spritzguß, Verguß oder Verpressen, also die Weiterverarbeitung der Bornitrid-Agglomerate zu Polymer-Bornitrid-Mischungen und Polymer-Bornitrid-Verbundwerkstoffen, möglichst ohne Zerfall überstehen müssen. Falls die Agglomerate beim Compoundieren zerfallen, besteht die Gefahr, daß sich die rheologischen Eigenschaften der Polymer-Bornitrid-Mischungen verschlechtern und die Wärmeleitfähigkeit in den Polymer-Bornitrid-Verbundwerkstoffen abnimmt.

Überraschend ist weiterhin, dass mit den erfindungsgemäßen Bornitrid-Agglomeraten mit nitridischer Bindephase in gefüllten Polymeren höhere Wärmeleitfähigkeitswerte als mit binderfreien Bornitrid-Agglomeraten erhalten werden können.

Mit isotropen Agglomeraten ist die Wärmeleitfähigkeit in gefüllten Polymeren nicht so stark richtungsabhängig wie beim Einsatz von plättchenförmigen Füllstoffen, also beispielsweise von plättchenförmigen Bornitrid-Primärpartikeln. Diese Minimierung der Richtungsabhängigkeit gelingt jedoch nur dann, wenn die isotropen Agglomerate mechanisch stabil genug sind, dass sie insbesondere den Compoundierschritt überstehen. Bei reinen Bornitrid-Agglomeraten ist dies nicht der Fall. Mit den erfindungsgemäßen nitridgebundenen Bornitrid-Agglomeraten, die eine gute mechanische Stabilität aufweisen, kann die Richtungsabhängigkeit der Wärmeleitfähigkeit in Bornitrid-Polymer-Verbundwerkstoffen (gefüllten Polymeren) deutlich verringert werden.

Kurze Beschreibung der beigefügten Zeichnungen

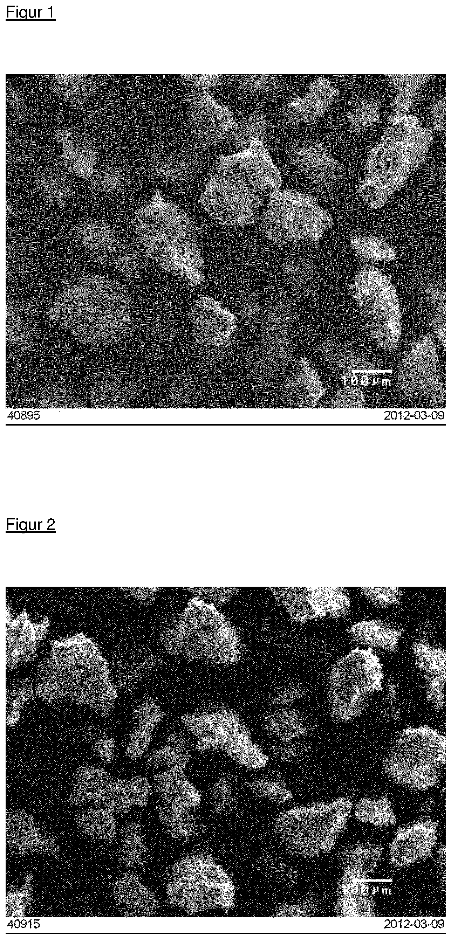

Figur 1 zeigt eine REM-Aufnahme von erfindungsgemäßen Agglomeraten gemäß Beispiel 9 in 100-facher Vergrößerung.
Figur 2 zeigt eine REM-Aufnahme von erfindungsgemäßen Agglomeraten gemäß Beispiel 16 in 100-facher Vergrößerung.
Figur 3 zeigt eine REM-Aufnahme von erfindungsgemäßen Agglomeraten gemäß Beispiel 23 in 100-facher Vergrößerung.

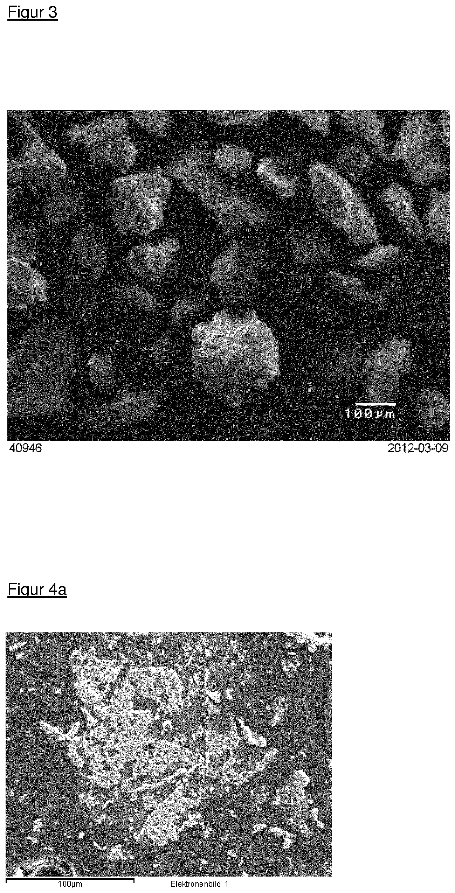

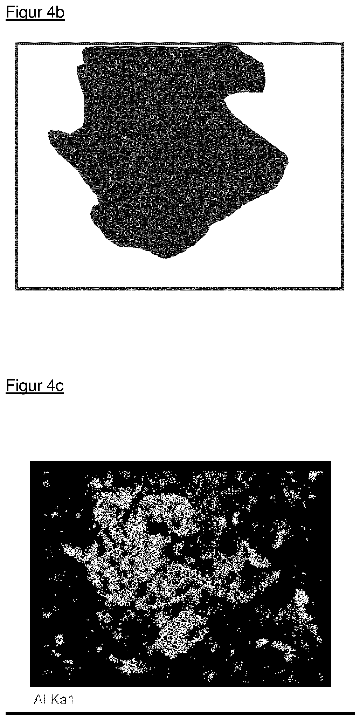

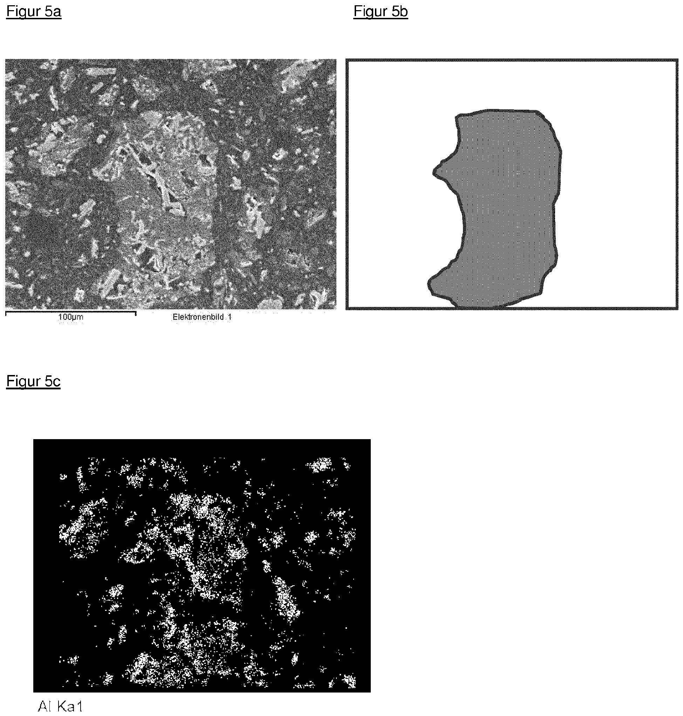

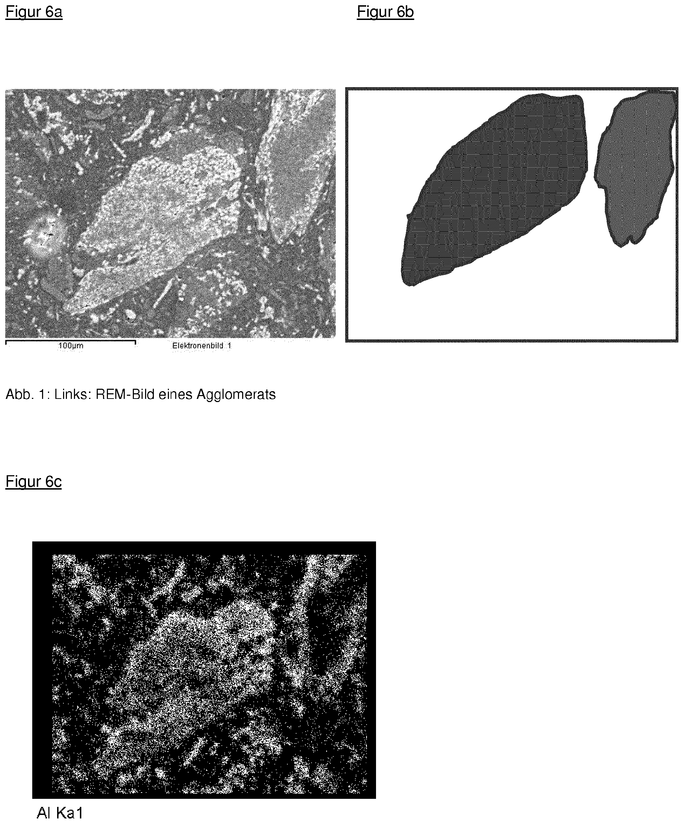

Die Figuren 4 a-c, 5 a-c und 6 a-c zeigen Untersuchungen an Querschliffen von erfindungsgemäßen Agglomeraten (Figuren 4 a-c: Beispiel 9, Figuren 5 a-c: Beispiel 16, Figuren 6 a-c: Beispiel 23). Die Figuren 4a, 5a und 6a zeigen REM-Aufnahmen von Querschliffen von erfindungsgemäßen Agglomeraten, die in Epoxid eingebettet wurden. Das Epoxid ist in den Aufnahmen dunkelgrau. Das Bornitrid ist hellgrau, die Bindephase (Aluminiumnitrid) ist noch heller. Zur besseren Orientierung ist in den Figuren 4b, 5b und 6b die Kontur des untersuchten Agglomerats dargestellt. Die Figuren 4c, 5c und 6c zeigen die dazugehörigen EDX-Flächenscans für das Element Aluminium. Die Helligkeit der Bildpunkte auf den Flächenscans steht für die Anzahl der Counts für die Al-Ka Linie. Je heller desto mehr Counts desto mehr Aluminium. In schwarzen Bereichen gibt es keine Counts, also auch kein Aluminium. Anhand der Abbildungen ist gut zu erkennen, dass die hellen Bereiche in den Agglomeraten der Figuren 4a, 5a und 6a den entsprechenden aluminiumreichen Bereichen der Figuren 4c, 5c und 6c entsprechen.

In Figur 4c ist das Aluminium im Agglomerat inhomogen verteilt. Es sind keine einzelnen Kristallite einer Sekundärphase erkennbar. Es gibt aluminiumreiche und aluminiumarme Bereiche im Agglomerat.

In Figur 5a ist die Bindephase als nadel- bzw. plättchenförmige Einschlüsse im Agglomerat zu erkennen.

In Figur 5c ist das Aluminium im Agglomerat inhomogen verteilt. Es sind aluminiumarme bzw. aluminiumfreie neben den aluminiumreichen Bereichen der Sekundärphase zu erkennen.

In Figur 6c ist das Aluminium in weiten Bereichen homogen verteilt. Das rechte Agglomerat enthält einen aluminiumfreien Bereich im Kern. Tendenziell wurde mehr Aluminium in oberflächennahen Bereichen der Agglomerate als im Agglomeratkern detektiert.

Detaillierte Beschreibung der Erfindung

Wie bereits oben erwähnt, handelt es sich bei den erfindungsgemäßen Bornitrid-Agglomeraten um Agglomerate von plättchenförmigen hexagonalen Bornitrid-Primärpartikeln, wobei die hexagonalen Bornitrid-Primärpartikel miteinander mittels einer anorganischen Bindephase verbunden sind. Die anorganische Bindephase umfasst wenigstens ein Nitrid und/oder Oxinitrid. Bei den Nitriden und Oxinitriden handelt es sich um Verbindungen der Elemente Aluminium, Silizium, Titan und Bor.

Beispiele für in der Bindephase enthaltene Verbindungen sind Aluminiumnitrid, Aluminumoxinitrid, Siliziumnitrid, Siliziumoxinitrid (beispielsweise $Si_2N_2O$), Titannitrid, oder auch gemischte Nitride bzw. Oxinitride wie beispielsweise Sialone (beispielsweise $Si_3Al_3O_3N_5$). Auch Mischungen aus den genannten Verbindungen sind möglich.

Vorzugsweise handelt es sich bei den in der Bindephase enthaltenen Nitriden und Oxinitriden um Aluminiumnitrid (AlN) und/oder Aluminiumoxinitrid.

Besonders bevorzugt enthält die Bindephase Aluminiumnitrid und/oder Aluminumoxinitrid.

Das Aluminiumoxinitrid kann verschiedene Zusammensetzungen aufweisen, beispielsweise kann die Bindephase Aluminumoxinitrid der Zusammensetzungen $Al_8O_3N_6$ und $Al_5O_6N$ enthalten, aber auch andere Stöchiometrien sind möglich.

Die Nitride und Oxinitride der Bindephase können amorph, teilkristallin oder kristallin sein. Vorzugsweise ist die Bindephase kristallin, da damit höhere Wärmeleitfähigkeitswerte in den Bornitrid-Polymer-Verbundwerkstoffen erzielt werden können.

Die nitridische Bindephase kann zusätzlich auch oxidische Phasen enthalten, wie beispielsweise Boroxid ($B_2O_3$), Aluminiumoxid ($Al_2O_3$), Siliziumdioxid ($SiO_2$), Titandioxid ($TiO_2$), Yttriumoxid ($Y_2O_3$), Magnesiumoxid (MgO), Calciumoxid (CaO) und Seltenerdmetalloxide.

Weiterhin kann die Bindephase zusätzlich noch Borate enthalten, beispielsweise Aluminiumborate oder Calciumborate.

Die Bindephase kann herstellungsbedingt durch den Reduktions-Nitridierungsprozess noch Restkohlenstoff bzw. geringe Mengen von Carbiden enthalten. Daneben kann auch Kohlenstoff enthalten sein, bei dem es sich nicht um herstellungsbedingt enthaltenen Restkohlenstoff handelt, sondern auch um Kohlenstoff, der beispielsweise in Form von Graphit vorliegen kann. Außerdem kann die Bindephase auch metallische Verunreinigungen enthalten, beispielsweise als Restmengen von bei der Nitridierung der Bindephase nicht vollständig umgesetzten metallischen Bindephasen-Rohstoffen wie Aluminium, Silizium oder Titan. Der Anteil an metallischen Phasen und Kohlenstoff beträgt vorzugsweise weniger als 10 Gew.-%, weiter vorzugsweise weniger als 5 Gew.-%, bezogen auf das Gesamtagglomerat. Die Bindephase kann auch elementares Bor, Boride, Borcarbid oder andere Carbide wie beispielsweise Siliziumcarbid enthalten. Der Anteil an Bor, Boriden, Borcarbid und anderen Carbiden beträgt vorzugsweise weniger als 10 Gew.-%, weiter vorzugsweise weniger als 5 Gew.-%, bezogen auf das Gesamtagglomerat.

Der Anteil der Nitride und Oxinitride in der Bindephase beträgt vorzugsweise wenigstens 50 Gew.-%, besonders bevorzugt wenigstens 80 Gew.-%, bezogen auf das Gesamtgewicht der Bindephase.

Die Bindephase befindet sich zwischen den Bornitrid-Primärpartikeln in den Agglomeraten, sie kann sich auch zumindest teilweise auf der Oberfläche der Agglomerate befinden oder die Oberfläche zum großen Teil bedecken.

Die Bindephase bindet die Bornitrid-Primärpartikel im Agglomerat, so dass im Vergleich zu binderfreien Agglomeraten mechanisch stabilere Agglomerate erhalten werden können.

Die Stabilität der Agglomerate lässt sich beispielsweise in Ultraschalluntersuchungen bei gleichzeitiger Messung der Agglomeratgröße über Lasergranulometrie untersuchen, wobei durch die Einwirkung des Ultraschalls das Agglomerat mit der Zeit zerfällt. Der zeitliche Zerfall der Agglomeratgröße wird aufgezeichnet, wobei sich je nach Agglomeratstabilität unterschiedliche Kurvenverläufe ausbilden. Weiche Agglomerate zerfallen dabei schneller als mechanisch stabilere Agglomerate.

Die Agglomeratdichte der erfindungsgemäßen Agglomerate, die mittels geometrischer Dichtebestimmung an nitridierten Pulverpresslingen gemessen werden kann, beträgt vorzugsweise wenigstens 0,3 % der theoretischen Dichte.

Die erfindungsgemäßen Agglomerate können abhängig von Herstellungsverfahren rundlich bis kugelförmig oder blockig und kantig sein. Über Sprühtrocknen hergestellte Agglomerate behalten ihre rundliche bis kugelige Form auch nach der Nitridierung. Über Kompaktierung und Zerkleinerung hergestellte Agglomerate haben eine eher blockige oder brockige, kantige bzw. eckige Form.

Die Bornitrid-Primärpartikel sind in den erfindungsgemäßen Agglomeraten regellos verteilt, wobei lokal Bereiche einer Nahordnung existieren können.

Die Bornitrid-Plättchen sind in den erfindungsgemäßen Agglomeraten im Wesentlichen ohne Vorzugsrichtung zueinander orientiert, so dass die erfindungsgemäßen Agglomerate weitgehend isotrope Eigenschaften haben.

Die Isotropie der Bornitrid-Agglomerate, d. h. der Grad der regellosen Orientierung der plättchenförmigen Bornitrid-Primärpartikel in den erfindungsgemäßen Agglomeraten kann durch den Texturindex charakterisiert werden. Der Texturindex von hexagonalem Bornitrid mit isotroper Ausrichtung der plättchenförmigen Bornitrid-Primärpartikel, also ohne Vorzugsorientierung, liegt bei 1. Mit abnehmender Isotropie, d.h. für Bornitrid-Agglomerate mit zunehmendem Grad der Orientierung der plättchenförmigen Bornitrid-Primärpartikel zueinander, steigt der Texturindex an. Die erfindungsgemäßen Agglomerate weisen vorzugsweise einen Texturindex von weniger als 5, bevorzugt weniger als 3,5 auf. Die Bestimmung des Texturindex erfolgt röntgenographisch. Dazu wird das Verhältnis der an Röntgenbeugungsdiagrammen gemessenen Intensitäten des (002)- und des (100)-Reflexes bestimmt und durch den entsprechenden Verhältniswert für eine ideale, nicht texturierte hBN-Probe geteilt. Dieses ideale Verhältnis kann aus den JCPDS-Daten ermittelt werden und beträgt 7,29.

Der Texturindex (TI) kann somit gemäß der Formel

$$TI = \frac{I_{(002),\,Probe} / I_{(100),\,Probe}}{I_{(002),\,theoretisch} / I_{(100),\,theoretisch}} = \frac{I_{(002),\,Probe} / I_{(100),\,Probe}}{7{,}29}$$

ermittelt werden.

Die erfindungsgemäßen Agglomerate haben vorzugsweise eine mittlere Agglomeratgröße ($d_{50}$) von 1 mm und weniger, weiter bevorzugt 500 $\mu$m und weniger, weiter bevorzugt 300 $\mu$m und weniger und besonders bevorzugt 200 $\mu$m und weniger (Nassmessung, Mastersizer 2000, Malvern, Deutschland).

Die spezifische Oberfläche (BET) der erfindungsgemäßen Agglomerate beträgt vorzugsweise 20 m$^2$/g und weniger, weiter vorzugsweise 10 m$^2$/g und weniger. Die spezifische Oberfläche kann jedoch auch bei Werten oberhalb 20 m$^2$/g liegen.

Der Anteil der nitridischen Bindephase in den erfindungsgemäßen Bornitrid-Agglomeraten beträgt vorzugsweise wenigstens 0,5 Gew.-%, weiter vorzugsweise wenigstens 1 Gew.-%, weiter vorzugsweise wenigstens 5 Gew.-% und besonders bevorzugt wenigstens 10 Gew.-%. Vorzugsweise beträgt der Anteil der nitridischen Bindephase in den erfindungsgemäßen Bornitrid-Agglomeraten nicht mehr als 60 Gew.-%, weiter vorzugsweise nicht mehr als 50 Gew.-%, jeweils bezogen auf das Gesamtgewicht der Agglomerate.

Die mittlere Partikelgröße der plättchenförmigen Bornitrid-Primärpartikel in den erfindungsgemäßen Bornitrid-Agglomeraten beträgt vorzugsweise 1 - 25 $\mu$m, weiter vorzugsweise 1 - 10 $\mu$m.

Zur Herstellung der erfindungsgemäßen Bornitrid-Agglomerate wird Bornitrid-Ausgangspulver mit Bindephasen-Rohstoffen vermischt. Aus dieser Mischung werden in einem Formgebungsschritt Granulate oder Formkörper hergestellt, die anschließend einer Temperaturbehandlung in einer Nitridieratmosphäre unterzogen werden. Die erhaltenen Granulate oder Formkörper können gegebenenfalls anschließend noch zerkleinert und/oder fraktioniert werden. Als Bornitrid-Ausgangspulver zur Erzeugung der erfindungsgemäßen Bornitrid-Agglomerate können hexagonales Bornitrid, amorphes Bornitrid, teilkristallines Bornitrid, sowie Mischungen davon eingesetzt werden.

Die mittlere Partikelgröße $d_{50}$ des eingesetzten Bornitrid-Pulvers kann 0,5 - 50 $\mu$m, vorzugsweise 0,5 - 15 $\mu$m, weiter vorzugsweise 0,5 - 5 $\mu$m betragen. So können beispielsweise hexagonale Bornitrid-Pulver mit einer mittleren Partikelgröße von 1 $\mu$m, 3 $\mu$m, 6 $\mu$m, 9 $\mu$m und 15 $\mu$m eingesetzt werden, aber auch höhere mittlere Partikelgrößen bis zu 50 $\mu$m sind möglich. Ebenso können Mischungen verschiedener hexagonaler Bornitrid-Pulver mit unterschiedlichen Partikelgrößen eingesetzt werden. Die Messung der mittleren Partikelgröße (dso) der eingesetzten Bornitrid-Pulver erfolgt üblicherweise mittels Laserbeugung (Naßmessung, Mastersizer 2000, Malvern).

Es können $B_2O_3$-freie Bornitrid-Pulver sowie Bornitrid-Pulver mit geringeren $B_2O_3$-Gehalten von bis zu 0,5 Gew.-%, aber auch mit höheren $B_2O_3$-Gehalten von bis zu 10 Gew.-% und mehr eingesetzt werden.

Es ist auch möglich, Mischungen aus pulverförmigem oder granuliertem Bornitrid einzusetzen.

Die Bindephasen-Rohstoffe können in fester oder flüssiger bzw. pastöser Form vorliegen.

Die Vermischung von Bornitrid-Ausgangspulver und Bindephasen-Rohstoffen kann beispielsweise in einer Mischtrommel, in einem V-Mischer, Röhnradmischer, einer Schwingmühle oder einem Eirichmischer erfolgen. Die Homogenität kann in einem folgenden Mahlschritt (z.B. Schlagkreuzmühle, Trommelmühle, Rührwerkskugelmühle) weiter erhöht werden. Die Pulvermischung kann trocken oder angefeuchtet sein. Der Zusatz von Presshilfsmitteln und ggf. Gleithilfsmitteln ist ebenfalls möglich. Die Vermischung kann auch nass erfolgen, beispielsweise wenn die anschließende Herstellung der Granulate über Sprühtrocknen oder Aufbaugranulation erfolgt.

Die Formgebung kann durch Verdichten der trockenen oder angefeuchteten Pulvermischung zu Platten oder Tabletten mittels Uniaxialpressen, über isostatisches Verpressen oder über Walzenkompaktieren erfolgen. Ebenfalls mögliche Formgebungsverfahren sind Granulationsverfahren wie Sprühgranulierung oder Aufbaugranulierung. Die Restfeuchte der hergestellten Formkörper oder Granulate kann vor der Nitridierung durch eine Temperaturbehandlung bei ca. 100 °C ausgetrieben werden.

Die getrockneten Formkörper oder Granulate werden einer Temperaturbehandlung in einer Nitridieratmosphäre unterzogen, bei Temperaturen von wenigstens 1000°C, vorzugsweise von wenigstens 1400°C, weiter vorzugsweise von wenigstens 1600°C. Die Nitridieratmosphäre umfasst vorzugsweise Stickstoff und/oder Ammoniak. Durch die Temperaturbehandlung in der Nitridieratmosphäre entsteht eine nitridische Bindephase, die die Bornitrid-Primärpartikel miteinander verbindet. Durch den Nitridierschritt kann der Kristallisationsgrad der Primärpartikel zunehmen, was mit einem Primärpartikelwachstum verbunden ist.

In einer ersten Ausführungsform (direkte Nitridierung) werden als Bindephasen-Rohstoffe zur Erzeugung der nitridischen Bindephase Metallpulver eingesetzt, vorzugsweise ausgewählt aus der Gruppe umfassend Aluminium, Silizium, Titan und Mischungen davon. Im Nitridierschritt wird das Metall zum entsprechenden Metallnitrid umgesetzt. Es ist auch möglich, dass bei der Nitridierung Oxinitride bzw. Mischungen von Metallnitriden und Oxinitriden entstehen.

In einer zweiten Ausführungsform (Reduktions-Nitridierung)werden als Bindephasen-Rohstoffe zur Erzeugung der nitridischen Bindephase Metallverbindungen in Kombination mit Reduktionsmitteln eingesetzt. Als Metallverbindungen werden dabei vorzugsweise Verbindungen der Elemente Aluminium, Silizium und Titan eingesetzt, bevorzugt Oxide und/oder Hydroxide wie beispielsweise Aluminiumoxid ($Al_2O_3$), Aluminiumhydroxid ($Al(OH)_3$), Böhmit (AlOOH), Siliziumdioxid ($SiO_2$) und Titandioxid ($TiO_2$). Als Metallverbindungen können weiterhin Borate eingesetzt werden, beispielsweise Aluminiumborat. Als Reduktionsmittel können Kohlenstoff und Wasserstoff sowie organische Verbindungen wie beispielsweise Polyvinylbutyral (PVB), Melamin und Methan eingesetzt werden. Werden gasförmige Stoffe wie beispielsweise Wasserstoff oder Methan als Reduktionsmittel eingesetzt, so werden diese Stoffe der Nitridieratmosphäre zugesetzt. Das zur Reduktion notwendige Reduktionsmittel kann auch bereits in der Metallverbindung vorliegen, so dass sich der Einsatz zusätzlicher Reduktionsmittel erübrigt, beispielsweise bei Einsatz von Aluminiumisopropoxid, Tetraethylorthosilikat oder Titanisopropoxid als Bindemittel-Rohstoff. Im Nitridierschritt werden die Metallverbindungen zu den entsprechenden Metallnitriden umgesetzt. Es ist auch möglich, dass bei der Nitridierung Oxinitride bzw. Mischungen von Metallnitriden und Oxinitriden entstehen, ebenso kann die Bindephase noch Reste von nicht umgesetzten Oxiden enthalten.

In einer dritten Ausführungsform können als Bindephasen-Rohstoffe nitridische Materialien eingesetzt werden, die sich bei der Temperaturbehandlung in der Nitridieratmosphäre verfestigen. Das nitridische Material kann eine Nitrid- und/oder Oxinitrid-Verbindung von Aluminium und Silizium sein, es können auch Titannitrid und die Nitride der Seltenen Erden eingesetzt werden, ebenso wie Verbindungen aus der Gruppe der Sialone. Als Sinterhilfsstoffe können Flüssigphasen eingesetzt werden wie beispielsweise Yttriumoxid, Aluminiumoxid, Magnesiumoxid, Calciumoxid, Siliziumoxid und Oxide der Seltenen Erden.

Es ist auch möglich, die verschiedenen Ausführungsformen miteinander zu kombinieren, beispielsweise kann die erste mit der dritten Ausführungsform kombiniert werden.

Bei den reaktionsgebundenen Ausführungsformen eins und zwei handelt es sich um bevorzugte Ausführungsformen, die erste Ausführungsform ist besonders bevorzugt.

Die Formkörper oder Granulate werden nach der Temperaturbehandlung in der Nitridieratmosphäre, falls erforderlich, in einem anschließenden Zerkleinerungs- und/oder Fraktionierungsschritt auf die gewünschte Agglomeratgröße gebrochen bzw. fraktioniert und somit die erfindungsgemäßen nitridgebundenen Agglomerate hergestellt. Wurde bereits während der Granulierung der Rohstoffe die Endagglomeratgröße eingestellt, beispielsweise wenn die Granulierung mittels Sprühtrocknung oder Aufbaugranulierung erfolgt ist, entfällt der Zerkleinerungsschritt nach der Nitridierung.

Die Zielgröße für die Agglomeratgröße hängt hauptsächlich von der jeweiligen Anwendung ab. Bei der Anwendung als Füllstoff für Polymere hängt sie beispielsweise von der beabsichtigten Verarbeitungstechnik und dem angestrebten Füllgrad ab, wobei die Eigenschaften des jeweiligen Kunststoffs und Verarbeitungsparameter wie beispielsweise die Viskosität berücksichtigt werden müssen, und kann an die jeweiligen Anwendungsbedingungen angepasst werden, wie beispielsweise die Anwendung als Füllstoff für Thermoplaste, als Füllstoff für Duroplaste, die Verarbeitung über Spritzguss, Extrusion, Verguß, Prägen oder Pressen und Folienherstellung.

Die erfindungsgemäßen BN-basierten Füllstoffe und Füllstoffkombinationen mit weiteren Füllstoffen können in unterschiedliche Matrixwerkstoffe eingearbeitet werden. Besonders bevorzugt sind hierbei Polymere wie Duroplaste, Thermoplaste und Silikone. Als Duroplaste können beispielsweise Epoxide, vernetzte Polyacrylate und Polyurethane eingesetzt werden, als Thermoplaste beispielsweise Polyamid (PA), Polyphenylensulfid (PPS), Polycarbonat (PC), Polypropylen (PP), thermoplastische Elastomere (TPE), thermoplastische Polyurethan-Elastomere (TPU) und Polyätheretherketone (PEEK).

Bei den erfindungsgemäßen Polymer-Bornitrid-Verbundwerkstoffen handelt es sich dabei um vorgemischte Produkte, die beispielsweise in Granulatform vorliegen und nach herkömmlichen Methoden zu anderen Werkstoffen und Formkörpern weiterverarbeitet werden können, beispielsweise durch Extrusionsverfahren. Auch die so hergestellten Formkörper werden hierin als Polymer-Bornitrid-Verbundwerkstoffe bezeichnet.

Zur Erreichung der Zielagglomeratgröße können übliche Schritte wie Sieben, Siebbrechen und Sichten eingesetzt werden. Gegebenenfalls enthaltener Feinanteil kann als erstes entfernt werden. Alternativ zum Sieben kann die definierte Zerkleinerung der Agglomerate auch über Siebreiben, Sichtermühlen, strukturierte Walzenbrecher und Schneidräder erfolgen. Auch eine Trockenmahlung beispielsweise in einer Kugelmühle ist möglich.

Die erfindungsgemäßen Bornitrid-Agglomerate können im Anschluss an ihre Herstellung noch weiteren Behandlungen unterzogen werden.

Dabei können beispielsweise eine oder mehrere der folgenden möglichen derartigen Behandlungen durchgeführt werden:

- eine Temperaturbehandlung unter Sauerstoff, die zur oberflächlichen Oxidation der erfindungsgemäßen Agglomerate führt. So können beispielsweise durch eine bei 500 °C durchgeführte Oxidation von Agglomeraten mit TiN-haltiger Bindephase Agglomerate mit oberflächlichem $TiO_2$ hergestellt werden, bei einer $Si_3N_4$-haltigen Bindephase kann oberflächliches $SiO_2$ und bei einer AlN-haltigen Bindephase kann oberflächliches $Al_2O_3$ erzeugt werden.
- eine Wasserdampfbehandlung
- eine Oberflächenmodifizierung mit Silanen, Titanaten oder anderen metallorganischen Verbindungen, entweder bei Raumtemperatur oder unter Temperatureinwirkung und mit Träger- oder Reaktionsgasen
- eine Oberflächenmodifizierung mit Polymeren, beispielsweise mit Polyethylenglykol (PEG), Polyvinylalkohol (PVA), Polyvinylbutyral (PVB), Polyvinylpyrroldion (PVP), Copolymeren, Acrylaten, Ölen oder Carbonsäuren
- eine Infiltration mit Sol-Gel-Systemen, beispielsweise mit Böhmitsol oder $SiO_2$-Sol, oder mit wasserlöslichen Gläsern oder Nanopartikeln oder oberflächenmodifizierten Nanopartikeln oder Mischungen daraus.

Die aufgeführten Oberflächenbehandlungen können auch für Gemische von erfindungsgemäßen Agglomeraten mit anderen Bornitrid-Füllstoffen durchgeführt werden.

Es ist auch möglich, mehrere der aufgeführten Behandlungen in beliebiger Reihenfolge zu kombinieren. Die Behandlungen können beispielsweise im Wirbelschichtverfahren durchgeführt werden.

Bei der Anwendung als Füllstoff für Polymere wird durch die beschriebenen Behandlungen eine verbesserte Ankopplung der Polymermatrix an die erfindungsgemäßen nitridgebundenen Agglomerate erzielt.

Die erfindungsgemäßen Agglomerate können, wie bereits erwähnt, als Füllstoff für Polymere eingesetzt und zu Polymer-Bornitrid-Verbundwerkstoffen verarbeitet werden. Dabei können zur Herstellung der gefüllten Polymere auch Mischungen der erfindungsgemäßen Agglomerate mit anderen bekannten Füllstoffen für Polymere, wie beispielsweise Kohlenstoff, Graphit, expandierter Graphit, Aluminiumoxid, Aluminiumnitrid und Siliziumdioxid, beispielsweise in Form von Fasern, Kugeln oder Plättchen, eingesetzt werden. Ebenso können zur Herstellung der gefüllten Polymere Mischungen unterschiedlicher Fraktionen erfindungsgemäßer Agglomerate eingesetzt werden sowie Mischungen solcher Fraktionen mit Primärpartikelfraktionen von Bornitrid, also mit plättchenförmigen Bornitrid-Partikeln, oder mit plättchenförmigen Agglomeraten von Bornitrid-Partikeln. Diese Bornitrid-Mischungen können ebenfalls als Mischung mit anderen bekannten Füllstoffen für Polymere eingesetzt werden.

Die erfindungsgemäßen Agglomerate können auch für andere Anwendungen eingesetzt werden, beispielsweise zur Herstellung von Sinterkörpern.

Beispiele und Vergleichsbeispiele

Beispiel 1

990g hexagonales Bornitrid-Pulver mit einer Primärpartikelgröße $d_{50}$ von 3 $\mu$m (BORO-NID® S1, Fa. ESK Ceramics GmbH & Co. KG, Deutschland; Primärpartikelgröße gemessen mittels Laserbeugung (Mastersizer 2000, Malvern, Naßmessung)) wird mit 10 g Aluminiumpulver < 100 $\mu$m (Aluminium-Grieß Fa. Eckart GmbH & Co. KG, Velden, Deutschland) gemischt und in einer PE-Flasche auf dem Rollenbock mit Mahlkugeln 12 Stunden homogenisiert. Das Pulvergemisch wird in einem Walzenkompaktierer (RC 100, Fa. Powtec GmbH, Remscheid, Deutschland) kompaktiert. Die Kraft, mit der die Walzen beim Kompaktiervorgang aneinander gepreßt werden, beträgt 49 kN. Die verwendeten Walzen haben eine geriffelte Oberfläche, wodurch die entstehenden Schülpen eine Dicke von 0,4 bis 1,6 mm erreichen.

In der integrierten Siebreibe mit 1 mm Siebweite werden die Schülpen zerkleinert. Das entstandene Granulat wird unter gleichen Prozessbedingungen nochmals aufgegeben, wobei durch Umgehung der Siebreibe Schülpen mit einer Grundfläche von ca. 3 cm$^2$ und einer Dicke von 0,4 bis 1, 6 mm gewonnen werden.

Die Nitridierung der Bindephase erfolgt bei 2050 °C während 2 Stunden in strömender Stickstoffatmosphäre. Dabei wird mit 17,5 °C/min bis zum Erreichen der Endtemperatur von 2050 °C aufgeheizt. Die erhaltenen nitridgebundenen BN-Schülpen werden auf eine Größe von < 200 μm siebgebrochen.

Röntgenografisch lässt sich an den erhaltenen Bornitrid-Agglomeraten Aluminiumnitrid nachweisen, neben hexagonalem Bornitrid als Hauptphase.

Die so hergestellten nitridgebundenen Bornitrid-Agglomerate < 200 μm werden mit einem Anteil von 40 Vol.-% in Epoxidharz und Härter (Epofix, Struers GmbH, Willich, Deutschland) im Planetenmischer (Speedmixer DAC 150.1, Fa. Hauschild, Hamm, Deutschland) 30 Sekunden bei 3000 U/min homogenisiert. Die Mischung wird 12 Stunden bei Raumtemperatur und weitere 12 Stunden bei 80 °C gehärtet. Aus dem ausgehärteten Compound wird durch mechanische Bearbeitung (Sägen und Fräsen/Schleifen) eine Probe mit der Abmessung 10*10*2 mm$^3$ hergestellt. Die Bestimmung der Wärmeleitfähigkeit (WLF) erfolgt durch Messung der Größen Temperaturleitfähigkeit a, spezifische Wärmekapazität $c_p$ und Dichte D und wird aus diesen Größen berechnet nach der Gleichung

$$WLF = a * c_p * D.$$

Die Messung von a und $c_p$ wird mit dem Nanoflash LFA 447 (Netzsch, Selb, Deutschland) an Proben der Größe 10*10*2 mm$^3$ nahe Raumtemperatur durchgeführt. Die Dichte wird durch Wägung und Bestimmung der geometrischen Abmessungen der exakt geformten Proben ermittelt. Der erhaltene Messwert für die Wärmeleitfähigkeit ist in Tabelle 2 aufgeführt.

Die Einarbeitung der erfindungsgemäßen Bornitrid-Agglomerate in die gefüllten Epoxid-Proben zur Bestimmung der Wärmeleitfähigkeit erfolgte wie oben aufgeführt mit einem Anteil von 40 Vol.-%. Dies wurde auch bei den weiteren Beispielen soweit möglich beibehalten, um eine bessere Vergleichbarkeit der mit den verschiedenen Bornitrid-Agglomeraten erhaltenen Wärmeleitfähigkeitswerte zu ermöglichen, da die nitridgebundenen Bornitrid-Agglomerate aufgrund der unterschiedlichen Anteile an Bindephase unterschiedliche Werte für die theoretische Dichte aufweisen. Zur Berechnung der theoretischen Dichten wurde zur Vereinfachung der Berechnung die Annahme getroffen, dass die eingesetzten Bindephasen-Rohstoffe vollständig in die entsprechenden Nitride umgewandelt werden (AlN bzw. TiN bzw. Si$_3$N$_4$). Die Angaben in Tabelle 2 in der Spalte "Menge Bindephase" sind die mit dieser Annahme ermittelten rechnerischen Werte.

Aus den hergestellten nitridgebundenen BN-Agglomeraten < 200 μm wird der Feinanteil < 100 μm durch Siebung abgetrennt. An der so erhaltenen

Siebfraktion 100 - 200 μm der nitridgebundenen Agglomerate wird mittels eines Lasergranulometers (Mastersizer 2000 mit Dispergiereinheit Hydro 2000S, Malvern, Herrenberg, Deutschland) die Agglomeratstabilität bestimmt. Dazu wird als Dispergiermedium eine Lösung aus einem Netzmittel in Wasser (Mischung aus 2 ml eines Spülmittels (G 530 Spülfix, BUZIL-Werk Wagner GmbH & Co. KG, Memmingen) und 0,375 ml Imbentin (Polyethylenglycolalkylether) in 10 1 destilliertem Wasser) verwendet. 10 - 20 mg der Agglomerate werden mit 6 ml des Dispergiermediums in einem Schnappdeckelgläschen (8 ml) durch Schütteln dispergiert. Aus der Probe wird mit einer Pipette Suspension entnommen und in die Nassmesszelle des Lasergranulometers getropft, bis die Laserverdunklung 5% erreicht (spezifizierter Bereich: 5 - 30%). Es wird mit einer Messung ohne Ultraschall begonnen und alle 15 Sekunden wird je eine weitere Messung mit Ultraschall durchgeführt, wobei die über die Gerätesoftware auf Werte zwischen 0 und 100% einstellbare Ultraschallleistung der Dispergiereinheit jeweils auf 5% der Maximalleistung eingestellt wird. Insgesamt werden zehn Messungen durchgeführt. Bei den Messungen läuft der Rührer der Dispergiereinheit mit 1750 U/min. Als Maß für die Agglomeratstabilität wird der Quotient aus dem $d_{90}$-Wert nach den zehn Messungen und dem $d_{90}$-Wert der ersten Messung herangezogen (multipliziert mit 100 zur Angabe in Prozent).

Die Zusammensetzung der Ausgangsmischung und die Nitridiertemperatur ist in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 μm), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 2

950 g hexagonales Bornitrid-Pulver mit einer Primärpartikelgröße $d_{50}$ von 3 μm (BORO-NID® S1, Fa. ESK Ceramics GmbH & Co. KG, Deutschland; Primärpartikelgröße gemessen mittels Laserbeugung (Mastersizer 2000, Malvern, Naßmessung)) wird mit 50 g Aluminiumpulver (Aluminium-Grieß, Grade AS2WA1, Fa. Eckart GmbH & Co. KG, Velden, Deutschland) gemischt und in einer PE-Flasche auf dem Rollenbock mit Mahlkugeln 12 Stunden homogenisiert. Das Pulvergemisch wird in einem Walzenkompaktierer (RC 100, Fa. Powtec GmbH, Remscheid, Deutschland) kompaktiert. Die Kraft, mit der die Walzen beim Kompaktiervorgang aneinander gepreßt werden, beträgt 49 kN. Die verwendeten Walzen haben eine geriffelte Oberfläche, wodurch die entstehenden Schülpen eine Dicke von 0,4 bis 1,6 mm erreichen. In der integrierten Siebreibe mit 1 mm Siebweite werden die Schülpen zerkleinert. Das entstandene Granulat wird unter gleichen Prozessbedingungen nochmals aufgegeben, wobei durch Umgehung der Siebreibe Schülpen mit einer Grundfläche von ca. 3 cm$^2$ und einer Dicke von 0,4 bis 1, 6 mm gewonnen werden.

Die Nitridierung der Bindephase erfolgt bei 1600 °C während 2 Stunden in strömender Stickstoffatmosphäre. Dabei wird mit 17,5 °C/min bis zum Erreichen der Endtemperatur von 1600 °C aufgeheizt. Die erhaltenen nitridgebundenen BN-Schülpen werden auf eine Größe von < 200 $\mu$m siebgebrochen.

Röntgenografisch lässt sich an den erhaltenen Bornitrid-Agglomeraten Aluminiumnitrid nachweisen, neben hexagonalem Bornitrid als Hauptphase.

Wie in Beispiel 1 beschrieben, wird eine Probe zur Ermittlung der Wärmeleitfähigkeit hergestellt (mit 40 Vol.-% der hergestellten Bornitrid-Agglomerate < 200 $\mu$m in Epoxid).

Aus den hergestellten nitridgebundenen BN-Agglomeraten < 200 $\mu$m wird der Feinanteil < 100 $\mu$m durch Siebung abgetrennt. An der so erhaltenen Siebfraktion 100 - 200 $\mu$m der nitridgebundenen Agglomerate wird mittels Lasergranulometrie die Agglomeratstabilität bestimmt, wie in Beispiel 1 beschrieben.

Die Zusammensetzung der Ausgangsmischung und die Nitridiertemperatur ist in Tabelle 1 angegeben. Die Zusammensetzung der Agglomerate, die d$_{50}$- und d$_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 3

Beispiel 2 wird wiederholt, jedoch wird die Nitridierung bei 1950 °C für zwei Stunden in Stickstoff strömend durchgeführt.

Röntgenografisch lässt sich an den erhaltenen Bornitrid-Agglomeraten Aluminiumnitrid nachweisen, neben hexagonalem Bornitrid als Hauptphase.

Die Zusammensetzung der Ausgangsmischung und die Nitridiertemperatur ist in Tabelle 1 angegeben. Die Zusammensetzung der Agglomerate, die d$_{50}$- und d$_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 4

Beispiel 2 wird wiederholt, jedoch wird die Nitridierung bei 2050 °C für zwei Stunden in Stickstoff strömend durchgeführt.

Röntgenografisch lässt sich an den erhaltenen Bornitrid-Agglomeraten Aluminiumnitrid nachweisen, neben hexagonalem Bornitrid als Hauptphase.

Die Zusammensetzung der Ausgangsmischung und die Nitridiertemperatur ist in Tabelle 1 angegeben. Die Zusammensetzung der Agglomerate, die d$_{50}$- und d$_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 5

900 g hexagonales Bornitrid-Pulver mit einer Primärpartikelgröße d$_{50}$ von 3 $\mu$m (BORO-NID® S1, Fa. ESK Ceramics GmbH & Co. KG, Deutschland; Primärpartikelgröße gemessen mittels Laserbeugung (Mastersizer 2000, Malvern, Naßmessung) wird mit 100 g Aluminiumpulver (Aluminium-Grieß, Grade AS2WA1, Fa. Eckart GmbH & Co. KG, Velden, Deutschland) gemischt und in einer PE-Flasche auf dem Rollenbock mit Mahlkugeln 12 Stunden homogenisiert. Das Pulvergemisch wird in einem Walzenkompaktierer (RC 100, Fa. Powtec GmbH, Remscheid, Deutschland) kompaktiert. Die Kraft, mit der die Walzen beim Kompaktiervorgang aneinander gepreßt werden, beträgt 49 kN. Die verwendeten Walzen haben eine geriffelte Oberfläche, wodurch die entstehenden Schülpen eine Dicke von 0,4 bis 1,6 mm erreichen. In der integrierten Siebreibe mit 1 mm Siebweite werden die Schülpen zerkleinert. Das entstandene Granulat wird unter gleichen Prozessbedingungen nochmals aufgegeben, wobei durch Umgehung der Siebreibe Schülpen mit einer Grundfläche von ca. 3 cm$^2$ und einer Dicke von 0,4 bis 1, 6 mm gewonnen werden. Die Nitridierung der Bindephase erfolgt bei 1600 °C während 2 Stunden in strömender Stickstoffatmosphäre. Dabei wird mit 17,5 °C/min bis zum Erreichen der Endtemperatur von 1600 °C aufgeheizt. Die erhaltenen nitridgebundenen BN-Schülpen werden auf eine Größe von < 200 $\mu$m siebgebrochen.

Röntgenografisch lässt sich an den erhaltenen Bornitrid-Agglomeraten Aluminiumnitrid nachweisen, neben hexagonalem Bornitrid als Hauptphase.

Wie in Beispiel 1 beschrieben, wird eine Probe zur Ermittlung der Wärmeleitfähigkeit hergestellt (mit 40 Vol.-% der hergestellten Bornitrid-Agglomerate < 200 $\mu$m in Epoxid).

Aus den hergestellten nitridgebundenen BN-Agglomeraten < 200 $\mu$m wird der Feinanteil < 100 $\mu$m durch Siebung abgetrennt. An der so erhaltenen

Siebfraktion 100 - 200 $\mu$m der nitridgebundenen Agglomerate wird mittels Lasergranulometrie die Agglomeratstabilität bestimmt, wie in Beispiel 1 beschrieben.

Die Zusammensetzung der Ausgangsmischung und die Nitriertemperatur ist in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 6

Beispiel 5 wird wiederholt, jedoch wird die Nitridierung bei 1950 °C für zwei Stunden in Stickstoff strömend durchgeführt.

Röntgenografisch lässt sich an den erhaltenen Bornitrid-Agglomeraten Aluminiumnitrid nachweisen, neben hexagonalem Bornitrid als Hauptphase.

Die Zusammensetzung der Ausgangsmischung und die Nitriertemperatur ist in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 7

Beispiel 5 wird wiederholt, jedoch wird die Nitridierung bei 2050 °C für zwei Stunden in Stickstoff strömend durchgeführt.

Röntgenografisch lässt sich an den erhaltenen Bornitrid-Agglomeraten Aluminiumnitrid nachweisen, neben hexagonalem Bornitrid als Hauptphase.

Die Zusammensetzung der Ausgangsmischung und die Nitriertemperatur ist in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 8

700 g hexagonales Bornitrid-Pulver mit einer Primärpartikelgröße $d_{50}$ von 3 $\mu$m (BORO-NID® S1, Fa. ESK Ceramics GmbH & Co. KG, Deutschland; Primärpartikelgröße gemessen mittels Laserbeugung (Mastersizer 2000, Malvern, Naßmessung) wird mit 300 g Aluminiumpulver (Aluminium-Grieß, Grade AS2WA1, Fa. Eckart GmbH & Co. KG, Velden, Deutschland) gemischt und in einer PE-Flasche auf dem Rollenbock mit Mahlkugeln 12 Stunden homogenisiert. Das Pulvergemisch wird in einem Walzenkompaktierer (RC 100, Fa. Powtec GmbH, Remscheid, Deutschland) kompaktiert. Die Kraft, mit der die Walzen beim Kompaktiervorgang aneinander gepreßt werden, beträgt 49 kN. Die verwendeten Walzen haben eine geriffelte Oberfläche, wodurch die entstehenden Schülpen eine Dicke von 0,4 bis 1,6 mm erreichen. In der integrierten Siebreibe mit 1 mm Siebweite werden die Schülpen zerkleinert. Das entstandene Granulat wird unter gleichen Prozessbedingungen nochmals aufgegeben, wobei durch Umgehung der Siebreibe Schülpen mit einer Grundfläche von ca. 3 cm$^2$ und einer Dicke von 0,4 bis 1, 6 mm gewonnen werden. Die Nitridierung der Bindephase erfolgt bei 1600 °C während 2 Stunden in strömender Stickstoffatmosphäre. Dabei wird mit 17,5 °C/min bis zum Erreichen der Endtemperatur von 1600 °C aufgeheizt. Die erhaltenen nitridgebundenen BN-Schülpen werden auf eine Größe von < 200 $\mu$m siebgebrochen.

Röntgenografisch lässt sich an den erhaltenen Bornitrid-Agglomeraten Aluminiumnitrid nachweisen, neben hexagonalem Bornitrid als Hauptphase.

Wie in Beispiel 1 beschrieben, wird eine Probe zur Ermittlung der Wärmeleitfähigkeit hergestellt (mit 40 Vol.-% der hergestellten Bornitrid-Agglomerate < 200 $\mu$m in Epoxid).

Aus den hergestellten nitridgebundenen BN-Agglomeraten < 200 $\mu$m wird der Feinanteil < 100 $\mu$m durch Siebung abgetrennt. An der so erhaltenen

Siebfraktion 100 - 200 $\mu$m der nitridgebundenen Agglomerate wird mittels Lasergranulometrie die Agglomeratstabilität bestimmt, wie in Beispiel 1 beschrieben.

Die Zusammensetzung der Ausgangsmischung und die Nitriertemperatur ist in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 9

Beispiel 8 wird wiederholt, jedoch wird die Nitridierung bei 1950 °C für zwei Stunden in Stickstoff strömend durchgeführt.

Röntgenografisch lässt sich an den erhaltenen Bornitrid-Agglomeraten Aluminiumnitrid nachweisen, neben hexagonalem Bornitrid als Hauptphase.

An den erhaltenen Bornitrid-Agglomeraten wurde eine Al-Bestimmung durchgeführt. Der erhaltene Messwert beträgt 26,0 Gew.-%, was einem Anteil von 39,5 Gew.-% Aluminiumnitrid in den Agglomeraten entspricht. Aus der Al-Analyse kann geschlossen werden, dass das eingesetzte Aluminiumpulver vollständig zu Aluminiumnitrid umgesetzt wurde und kein Aluminium abgedampft ist während der Nitridierung (30 Gew.-% Aluminium in der Ausgangsmischung entsprechen 26 Gew.-% Aluminium in den nitridierten Agglomeraten bei vollständiger Nitridierung des Aluminiums).

Der Aluminiumgehalt wird hierbei über einen alkalischen Schmelzaufschluß und Messung mittels ICP OES bestimmt. Der Aluminiumgehalt wird dabei als Hauptbestandteil im Prozentbereich wie folgt gemessen: grobes oder stückiges Probenmaterial ist mit einer geeigneten Mühle auf eine Korngröße < 150 $\mu$m (< 100 mesh) zu zerkleinern. Die hierfür verwendeten Geräte und Verfahren sind so zu wählen, dass die eingebrachten Kontaminationen die Richtigkeit und Präzision der Messung nicht beeinträchtigen.

Der Probenaufschluss erfolgt durch einen alkalischen Schmelzaufschluss. Hierzu wird eine Teilprobe von etwa 200 mg auf 0,01 mg genau in einen Platintiegel eingewogen, mit etwa 3 g Natrium/Kaliumcarbonat gemischt, mit weiteren 2 g Natrium/Kaliumcarbonat überschichtet und der Platindeckel aufgesetzt. Der Tiegel wird auf dem Bunsenbrenner so lange erhitzt, bis eine klare Schmelze entstanden ist. Die erkaltete Schmelze wird mit 20 ml Salzsäure (Konzentration etwa 10 mol/L) aufgelöst, die Lösung in einen 250 ml Messkolben überführt und dieser mit Wasser bis zur Marke aufgefüllt. Der Aluminiumkonzentration der Probenlösung wird mittels ICP OES gemessen. Die Kalibrierung erfolgt gegen matrixangepasste wässrige Kalibrierlösungen mit bekannter Aluminiumkonzentration. Der Methodenblindwert ist durch Anwendung der gleichen Prozedur, jedoch ohne Probe, zu messen. Der Aluminiumgehalt der Probe wird unter Berücksichtigung des Volumens der Probenlösung, der Probeneinwaage und des Methodenblindwerts berechnet.

Wie in Beispiel 1 beschrieben, wird eine Probe zur Ermittlung der Wärmeleitfähigkeit hergestellt (mit 40 Vol.-% der hergestellten Bornitrid-Agglomerate < 200 $\mu$m in Epoxid).

Aus den hergestellten nitridgebundenen BN-Agglomeraten < 200 $\mu$m wird der Feinanteil < 100 $\mu$m durch Siebung abgetrennt. An der so erhaltenen Siebfraktion 100 - 200 $\mu$m der nitridgebundenen Agglomerate wird mittels Lasergranulometrie die Agglomeratstabilität bestimmt, wie in Beispiel 1 beschrieben.

An der Siebfraktion 100 - 200 $\mu$m der nitridgebundenen Agglomerate wurde der Texturindex (TI) ermittelt, er beträgt 1,9. Dieser Wert zeigt, dass die Agglomerate keine starke Textur aufweisen und weitgehend isotrop sind.

Die Zusammensetzung der Ausgangsmischung und die Nitridiertemperatur ist in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 10

Beispiel 8 wird wiederholt, jedoch wird die Nitridierung bei 2050 °C für zwei Stunden in Stickstoff strömend durchgeführt.

Röntgenografisch lässt sich an den erhaltenen Bornitrid-Agglomeraten Aluminiumnitrid nachweisen, neben hexagonalem Bornitrid als Hauptphase.

Die Zusammensetzung der Ausgangsmischung und die Nitridiertemperatur ist in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 11

950 g hexagonales Bornitrid-Pulver mit einer Primärpartikelgröße $d_{50}$ von 3 $\mu$m (BORO-NID® S1, Fa. ESK Ceramics GmbH & Co. KG, Deutschland; Primärpartikelgröße gemessen mittels Laserbeugung (Mastersizer 2000, Malvern, Naßmessung)) wird mit 50 g Aluminiumpulver (Grade Standard Pyro MT, Fa. Eckart GmbH & Co. KG, Velden, Deutschland) gemischt und in einer PE-Flasche auf dem Rollenbock mit Mahlkugeln 12 Stunden homogenisiert. Mit dem Pulvergemisch werden im Walzenkompaktierer Granulate hergestellt, wie in Beispiel 1 beschrieben.

Die Nitridierung der Bindephase erfolgt bei 1600 °C während 2 Stunden in strömender Stickstoffatmosphäre. Dabei wird mit 17,5 °C/min bis zum Erreichen der Endtemperatur von 1600 °C aufgeheizt. Die erhaltenen nitridgebundenen BN-Schülpen werden auf eine Größe von < 200 $\mu$m siebgebrochen.

Röntgenografisch lässt sich an den erhaltenen Bornitrid-Agglomeraten Aluminiumnitrid und das Aluminiumoxinitrid $Al_8O_3N_6$ nachweisen, neben hexagonalem Bornitrid als Hauptphase.

Wie in Beispiel 1 beschrieben, wird eine Probe zur Ermittlung der Wärmeleitfähigkeit hergestellt (mit 40 Vol.-% der hergestellten Bornitrid-Agglomerate < 200 $\mu$m in Epoxid).

Die Zusammensetzung der Ausgangsmischung und die Nitridiertemperatur ist in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiele 12 - 17

Beispiel 11 wird wiederholt, jedoch werden der Anteil an Aluminiumpulver (Grade Standard Pyro MT) in der Pulvermischung zur Herstellung der Agglomerate sowie die Nitridiertemperatur variiert gemäß den Angaben in Tabelle 1.

Röntgenografisch lässt sich an den erhaltenen Bornitrid-Agglomeraten Aluminiumnitrid und das Aluminiumoxinitrid $Al_8O_3N_6$ nachweisen, neben hexagonalem Bornitrid als Hauptphase.

An den erhaltenen Bornitrid-Agglomeraten von Beispiel 16 wurde eine Al-Bestimmung gemäß Beispiel 9 durchgeführt. Der erhaltene Messwert beträgt 23,1 Gew.-%.

An der Siebfraktion 100 - 200 $\mu$m der nitridgebundenen Agglomerate aus Beispiel 16 wurde der Texturindex (TI) ermittelt, er beträgt 1,8. Dieser Wert zeigt, dass die Agglomerate keine starke Textur aufweisen und weitgehend isotrop sind.

Die Zusammensetzungen der Ausgangsmischungen und die Nitridiertemperaturen sind in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 18

950 g hexagonales Bornitrid-Pulver mit einer Primärpartikelgröße $d_{50}$ von 3 $\mu$m (BORO-NID® S1, Fa. ESK Ceramics GmbH & Co. KG, Deutschland; Primärpartikelgröße gemessen mittels Laserbeugung (Mastersizer 2000, Malvern, Naßmessung) wird mit 50 g Aluminiumpulver aus der Al-Paste (Grade STAPA Alupor SK I-NE/75, Fa. Eckart GmbH & Co. KG, Velden, Deutschland) gemischt und in einer PE-Flasche auf dem Rollenbock mit Mahlkugeln 12 Stunden homogenisiert. Mit dem Pulvergemisch werden im Walzenkompaktierer Granulate hergestellt, wie in Beispiel 1 beschrieben.

Die Nitridierung der Bindephase erfolgt bei 1950 °C während 2 Stunden in strömender Stickstoffatmosphäre. Dabei wird mit 17,5 °C/min bis zum Erreichen der Endtemperatur von 1950 °C aufgeheizt. Die erhaltenen nitridgebundenen BN-Schülpen werden auf eine Größe von < 200 $\mu$m siebgebrochen.

Röntgenografisch lässt sich an den erhaltenen Bornitrid-Agglomeraten Aluminiumnitrid nachweisen, neben hexagonalem Bornitrid als Hauptphase.

Wie in Beispiel 1 beschrieben, wird eine Probe zur Ermittlung der Wärmeleitfähigkeit hergestellt (mit 40 Vol.-% der hergestellten Bornitrid-Agglomerate < 200 $\mu$m in Epoxid).

Die Zusammensetzung der Ausgangsmischung und die Nitridiertemperatur ist in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiele 19 - 24

Beispiel 18 wird wiederholt, jedoch werden der Anteil an Aluminiumpulver (Grade STAPA Alupor SK I-NE/75) in der Pulvermischung zur Herstellung der Agglomerate sowie die Nitridiertemperatur variiert gemäß den Angaben in Tabelle 1.

Röntgenografisch lässt sich an den erhaltenen Bornitrid-Agglomeraten Aluminiumnitrid nachweisen, neben hexagonalem Bornitrid als Hauptphase.

An den erhaltenen Bornitrid-Agglomeraten von Beispiel 23 wurde eine Al-Bestimmung gemäß Beispiel 9 durchgeführt. Der erhaltene Messwert beträgt 26,4 Gew.-%.

An der Siebfraktion 100 - 200 $\mu$m der nitridgebundenen Agglomerate aus Beispiel 23 wurde der Texturindex (TI) ermittelt, er beträgt 2,7. Dieser Wert zeigt, dass die Agglomerate keine starke Textur aufweisen und weitgehend isotrop sind.

Die Zusammensetzungen der Ausgangsmischungen und die Nitridiertemperaturen sind in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 25

900 g hexagonales Bornitrid-Pulver mit einer Primärpartikelgröße $d_{50}$ von 3 $\mu$m (BORO-NID® S1, Fa. ESK Ceramics GmbH & Co. KG; Partikelgröße gemessen mittels Mastersizer 2000, Malvern, Naßmessung) wird mit 100 g $TiO_2$-Nanopulver (Hombitech, Sachtleben, Duisburg, Deutschland) gemischt und in einer PE-Flasche auf dem Rollenbock mit Mahlkugeln 12 Stunden homogenisiert. Mit dem Pulvergemisch werden im Walzenkompaktierer Granulate hergestellt, wie in Beispiel 1 beschrieben.

Die Nitridierung der Bindephase erfolgt bei 1950 °C während 2 Stunden in strömender Stickstoffatmosphäre. Dabei wird mit 17,5 °C/min bis zum Erreichen der Endtemperatur von 1950 °C aufgeheizt. Die erhaltenen nitridgebundenen BN-Schülpen werden auf eine Größe von < 200 $\mu$m siebgebrochen.

In Röntgenbeugungsuntersuchungen konnten die Bindephasen TiN und $TiB_2$ detektiert werden, neben hexagonalem Bornitrid als Hauptphase.

Wie in Beispiel 1 beschrieben, wird eine Probe zur Ermittlung der Wärmeleitfähigkeit hergestellt (mit 40 Vol.-% der hergestellten Bornitrid-Agglomerate < 200 $\mu$m in Epoxid).

An der Siebfraktion 100 - 200 $\mu$m der nitridgebundenen Agglomerate wird wie in Beispiel 1 beschrieben die Agglomeratstabilität bestimmt.

Die Zusammensetzung der Ausgangsmischung und die Nitridiertemperatur ist in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiele 26

Beispiel 25 wird wiederholt, jedoch wird $TiB_2$ als Ti-haltiger Bindephasen-Rohstoff eingesetzt. Die mittlere Partikelgröße $d_{50}$ des eingesetzten $TiB_2$-Pulvers (ESK GmbH & Co. KG) beträgt 16,5 $\mu$m, der Anteil an $TiB_2$ in der Pulvermischung beträgt 10 Gew.-%.

Nach der Nitridierung konnten in Röntgenbeugungsuntersuchungen die Bindephasen TiN und $TiB_2$ detektiert werden, neben hexagonalem Bornitrid als Hauptphase.

Die Zusammensetzung der Ausgangsmischung und die Nitridiertemperatur ist in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiele 27

Beispiel 25 wird wiederholt, jedoch wird Ti-Pulver als Bindephasen-Rohstoff (Fein Gepulvert 98+, Nr. 1.12379.0250, Merck, Darmstadt, Deutschland) eingesetzt.

Nach der Nitridierung konnten in Röntgenbeugungsuntersuchungen die Bindephasen TiN und $TiB_2$ detektiert werden, neben hexagonalem Bornitrid als Hauptphase.

Die Zusammensetzung der Ausgangsmischung und die Nitridiertemperatur ist in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 28

900 g amorphes Bornitrid-Pulvermit einem Gesamtsauerstoffgehalt von 8 Gew.-% (Fa. ESK Ceramics GmbH & Co. KG) wird mit 100 g $TiO_2$-Nanopulver (Hombitech, Sachtleben, Duisburg, Deutschland) gemischt und in einer PE-Flasche auf dem Rollenbock mit Mahlkugeln 12 Stunden homogenisiert. Mit dem Pulvergemisch werden im Walzenkompaktierer Granulate hergestellt, wie in Beispiel 1 beschrieben.

Die Nitridierung der Bindephase erfolgt bei 1950 °C während 2 Stunden in strömender Stickstoffatmosphäre. Dabei wird mit 17,5 °C/min bis zum Erreichen der Endtemperatur von 1950 °C aufgeheizt. Die erhaltenen nitridgebundenen BN-Schülpen werden auf eine Größe von < 200 $\mu$m siebgebrochen.

In Röntgenbeugungsuntersuchungen konnten die Bindephasen TiN und $TiB_2$ detektiert werden, neben hexagonalem Bornitrid als Hauptphase.

Mittels Untersuchungen im Rasterelektronenmikroskop (REM) konnte nachgewiesen werden, dass durch die Nitridierungsglühung ein starkes Kristallwachstum des Bornitrids eingetreten ist. Die im REM detektierbare mittlere Primärpartikelgröße des hexagonalen Bornitrids in den Agglomeraten beträgt ca. 12 - 15 $\mu$m.

Demgegenüber konnte bei den Beispielen, bei denen bereits kristallines hexagonales Bornitrid eingesetzt wurde, kein Kristallwachstum beobachtet werden (alle Beispiele mit Ausnahme der Beispiele 28 bis 30).

Wie in Beispiel 1 beschrieben, wird eine Probe zur Ermittlung der Wärmeleitfähigkeit hergestellt (mit 40 Vol.-% der hergestellten Bornitrid-Agglomerate < 200 $\mu$m in Epoxid).

An der Siebfraktion 100 - 200 $\mu$m der nitridgebundenen Agglomerate wird wie in Beispiel 1 beschrieben die Agglomeratstabilität bestimmt.

Die Zusammensetzung der Ausgangsmischung und die Nitridiertemperatur ist in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

## Beispiele 29

Beispiel 28 wird wiederholt, jedoch wird $TiB_2$ als Ti-haltiger Bindephasen-Rohstoff eingesetzt. Die mittlere Partikelgröße $d_{50}$ des eingesetzten $TiB_2$-Pulvers (ESK GmbH & Co. KG) beträgt 16,5 $\mu$m, der Anteil an $TiB_2$ in der Pulvermischung beträgt 10 Gew.-%.

Nach der Nitridierung konnten in Röntgenbeugungsuntersuchungen die Bindephasen TiN und $TiB_2$ detektiert werden, neben hexagonalem Bornitrid als Hauptphase.

Wie schon bei Beispiel 28 konnte mittels Untersuchungen im Rasterelektronenmikroskop (REM) nachgewiesen werden, dass durch die Nitridierungsglühung ein starkes Kristallwachstum des Bornitrids eingetreten ist. Die im REM detektierbare mittlere Primärpartikelgröße des hexagonalen Bornitrids in den Agglomeraten beträgt ca. 12 - 15 $\mu$m.

Die Zusammensetzung der Ausgangsmischung und die Nitridiertemperatur ist in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

## Beispiele 30

Beispiel 28 wird wiederholt, jedoch wird Ti-Pulver als Bindephasen-Rohstoff (Fein Gepulvert 98+, Nr. 1.12379.0250, Merck, Darmstadt, Deutschland) eingesetzt.

Nach der Nitridierung konnten in Röntgenbeugungsuntersuchungen die Bindephasen TiN und $TiB_2$ detektiert werden, neben hexagonalem Bornitrid als Hauptphase.

Wie schon bei Beispiel 28 konnte mittels Untersuchungen im Rasterelektronenmikroskop (REM) nachgewiesen werden, dass durch die Nitridierungsglühung ein starkes Kristallwachstum des Bornitrids eingetreten ist. Die im REM detektierbare mittlere Primärpartikelgröße des hexagonalen Bornitrids in den Agglomeraten beträgt ca. 12 - 15 $\mu$m.

Die Zusammensetzung der Ausgangsmischung und die Nitridiertemperatur ist in Tabelle 1 angegeben. Die Zusammensetzung der Agglomerate, die $d_{50}$- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

## Beispiel 31

860 g hexagonales Bornitrid-Pulver mit einer Primärpartikelgröße $d_{50}$ von 3 $\mu$m (BORO-NID® S1, ESK Ceramics GmbH & Co. KG; Primärpartikelgröße gemessen mittels Mastersizer 2000, Malvern, Naßmessung) wird mit 140 g Aluminiumnitridpulver (Grade B, dso = 3,4 $\mu$m, H.C. Starck) gemischt und in einer PE-Flasche auf dem Rollenbock mit Mahlkugeln 12 Stunden homogenisiert. Mit dem Pulvergemisch werden im Walzenkompaktierer Granulate hergestellt, wie in Beispiel 1 beschrieben.

Die Temperaturbehandlung der Granulate erfolgt bei 1950 °C während 2 Stunden in strömender Stickstoffatmosphäre. Dabei wird mit 17,5 °C/min bis zum Erreichen der Endtemperatur von 1950 °C aufgeheizt. Die erhaltenen geglühten nitridgebundenen BN-Schülpen werden auf eine Größe von < 200 $\mu$m siebgebrochen.

Wie in Beispiel 1 beschrieben, wird eine Probe zur Ermittlung der Wärmeleitfähigkeit hergestellt (mit 40 Vol.-% der hergestellten Bornitrid-Agglomerate < 200 $\mu$m in Epoxid).

An der Siebfraktion 100 - 200 $\mu$m der nitridgebundenen Agglomerate wird wie in Beispiel 1 beschrieben die Agglomeratstabilität bestimmt.

Die Zusammensetzung der Ausgangsmischung und die Nitridiertemperatur ist in Tabelle 1 angegeben. Die Zusammensetzung der Agglomerate, die $d_{50}$- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 32

550 g hexagonales Bornitrid-Pulver mit einer Primärpartikelgröße $d_{50}$ von 3 $\mu$m (BORO-NID® S1, Fa. ESK Ceramics GmbH & Co. KG; Primärpartikelgröße gemessen mittels Laserbeugung (Mastersizer 2000, Malvern, Naßmessung)) wird mit 450 g Aluminiumpulver aus der Al-Paste (Grade STAPA Alupor SK I-NE/75, Fa. Eckart GmbH & Co. KG, Velden, Deutschland) gemischt und in einer PE-Flasche auf dem Rollenbock mit Mahlkugeln 12 Stunden homogenisiert. Mit dem Pulvergemisch werden im Walzenkompaktierer Granulate hergestellt, wie in Beispiel 1 beschrieben.

Die Nitridierung der Bindephase erfolgt bei 1950 °C während 2 Stunden in strömender Stickstoffatmosphäre. Die erhaltenen nitridgebundenen BN-Schülpen werden auf eine Größe von < 200 $\mu$m siebgebrochen.

Röntgenografisch lässt sich an den erhaltenen Bornitrid-Agglomeraten Aluminiumnitrid neben hexagonalem Bornitrid nachweisen.

Wie in Beispiel 1 beschrieben, wird eine Probe zur Ermittlung der Wärmeleitfähigkeit hergestellt (mit 40 Vol.-% der hergestellten Bornitrid-Agglomerate < 200 $\mu$m in Epoxid).

An der Siebfraktion 100 - 200 $\mu$m der nitridgebundenen Agglomerate wird wie in Beispiel 1 beschrieben die Agglomeratstabilität bestimmt.

Die Zusammensetzung der Ausgangsmischung und die Nitridiertemperatur ist in Tabelle 1 angegeben. Die Zusammensetzung der Agglomerate, die $d_{50}$- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiele 33 und 34

Die Beispiele 33 und 34 wurden entsprechend Beispiel 32 erzeugt, wobei die Menge an Bindephasen-Rohstoff variiert wird, wie in Tabelle 1 angegeben. Die Umsetzung der Bindephasen-Rohstoffe zur nitridischen Bindephase wird entsprechend Beispiel 32 bei 1950 °C durchgeführt.

Die Zusammensetzungen der Ausgangsmischungen und die Nitridiertemperaturen sind in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Beispiel 35

700 g hexagonales Bornitrid-Pulver mit einer Primärpartikelgröße $d_{50}$ von 12 $\mu$m (ESK Ceramics GmbH & Co. KG; Primärpartikelgröße gemessen mittels Laserbeugung (Mastersizer 2000, Malvern, Naßmessung)) wird mit 300 g Aluminiumpulver aus der Al-Paste (Grade STAPA Alupor SK I-NE/75, Fa. Eckart GmbH & Co. KG, Velden, Deutschland) gemischt und in einer PE-Flasche auf dem Rollenbock mit Mahlkugeln 12 Stunden homogenisiert. Mit dem Pulvergemisch werden im Walzenkompaktierer Granulate hergestellt, wie in Beispiel 1 beschrieben.

Die Nitridierung der Bindephase erfolgt bei 1950 °C während 2 Stunden in strömender Stickstoffatmosphäre. Die erhaltenen nitridgebundenen BN-Schülpen werden auf eine Größe von < 200 $\mu$m siebgebrochen.

Röntgenografisch lassen sich an den erhaltenen Agglomeraten Aluminiumnitrid und hexagonales Bornitrid nachweisen.

Wie in Beispiel 1 beschrieben, wird eine Probe zur Ermittlung der Wärmeleitfähigkeit hergestellt (mit 40 Vol.-% der hergestellten Bornitrid-Agglomerate < 200 $\mu$m in Epoxid).

An der Siebfraktion 100 - 200 $\mu$m der nitridgebundenen Agglomerate wird wie in Beispiel 1 beschrieben die Agglomeratstabilität bestimmt.

Die Zusammensetzung der Ausgangsmischung und die Nitridiertemperatur ist in Tabelle 1 angegeben. Die Zusammensetzung der Agglomerate, die $d_{50}$- und $d_{90}$-Werte der Agglomeratgrößenverteilung (Mastersizer, Naßmessung ohne Ultraschall an der Siebfraktion 100 - 200 $\mu$m), die Agglomeratstabilität der erfindungsgemäßen Agglomerate und die Wärmeleitfähigkeit des mit 40 Vol.-% gefüllten Epoxycompounds sind in Tabelle 2 aufgeführt.

Vergleichsbeispiel 1

1000 g hexagonales Bornitrid-Pulver mit einer Primärpartikelgröße dso von 3 $\mu$m (BORO-NID® S1, ESK Ceramics GmbH & Co. KG; Primärpartikelgröße gemessen mittels Mastersizer 2000, Malvern, Naßmessung) werden in einer PE-Flasche auf dem Rollenbock mit Mahlkugeln 12 Stunden homogenisiert. Mit dem Pulvergemisch werden im Walzenkompaktierer Granulate hergestellt, wie in Beispiel 1 beschrieben.

Die Temperaturbehandlung der Schülpen erfolgt bei 1600 °C während 2 Stunden in strömender Stickstoffatmosphäre. Dabei wird mit 17,5 °C/min bis zum Erreichen der Endtemperatur von 1600 °C aufgeheizt. Die erhaltenen BN-Schülpen werden auf eine Größe von < 200 $\mu$m siebgebrochen.

Die so hergestellten Bornitrid-Agglomerate < 200 $\mu$m werden mit einem Anteil von 40 Vol.-% in Epoxidharz und Härter (Epofix, Struers GmbH, Willich, Deutschland) im Planetenmischer (Speedmixer DAC 150.1, Fa. Hauschild, Hamm, Deutschland) 30 Sekunden bei 3000 U/min homogenisiert. Die Mischung wird 12 Stunden bei Raumtemperatur und weitere 12 Stunden bei 80 °C gehärtet.

Aus dem ausgehärteten Compound wird durch mechanische Bearbeitung (Sägen und Fräsen/Schleifen) eine Probe mit der Abmessung 10\*10\*2 mm$^3$ hergestellt, an der die Wärmeleitfähigkeit wie in Beispiel 1 beschrieben bestimmt wird.

Aus den hergestellten Bornitrid-Agglomeraten < 200 $\mu$m wird der Feinanteil < 100 $\mu$m durch Siebung abgetrennt. An der so erhaltenen Siebfraktion 100 - 200 $\mu$m der Bornitrid-Agglomerate wird die Agglomeratstabilität bestimmt, wie in Beispiel 1 beschrieben.

Die Zusammensetzung der Ausgangsmischung und die Nitridiertemperatur ist in Tabelle 1 angegeben. Die Zusammensetzung der Agglomerate, die $d_{50}$- und $d_{90}$-Werte der Agglomeratgrößenverteilung (Mastersizer, Naßmessung ohne Ultraschall an der Siebfraktion 100 - 200 $\mu$m), die Agglomeratstabilität der Agglomerate und die Wärmeleitfähigkeit des mit 40 Vol.-% gefüllten Epoxycompounds sind in Tabelle 2 aufgeführt.

Vergleichsbeispiele 2 und 3

Die Vergleichsbeispiele 2 und 3 wurden entsprechend Vergleichsbeispiel 1 erzeugt, jedoch wurde die Temperaturbehandlung nicht bei 1600 °C, sondern bei 1950 °C (Vergleichsbeispiel 2) und bei 2050 °C (Vergleichsbeispiel 3) durchgeführt, jeweils während 2 Stunden.

Die Zusammensetzungen der Ausgangsmischungen und die Nitridiertemperaturen sind in Tabelle 1 angegeben. Die Zusammensetzung der Agglomerate, die dso- und $d_{90}$-Werte der Agglomeratgrößenverteilung (Mastersizer, Naßmessung ohne Ultraschall an der Siebfraktion 100 - 200 $\mu$m), die Agglomeratstabilität der Agglomerate und die Wärmeleitfähigkeit des mit 40 Vol.-% gefüllten Epoxycompounds sind in Tabelle 2 aufgeführt.

Tabelle 1:

| Beispiel Nr. | Bindephasen-Rohstoff Typ [Gew.-%] | Bindephasen-Rohstoffe Menge [Gew.-%] | Bornitrid-Primärpartikel (Ausgangspulver) \*) [Gew.-%] | Nitridiertemperatur [°C] |
|---|---|---|---|---|
| | | | | |
| | | | | |
| Beispiel 1 | Al-Grieß) | 1 | 99 | 2050 |
| Beispiel 2 | Al-Grieß | 5 | 95 | 1600 |
| Beispiel 3 | Al-Grieß | 5 | 95 | 1950 |
| Beispiel 4 | Al-Grieß | 5 | 95 | 2050 |
| Beispiel 5 | Al-Grieß | 10 | 90 | 1600 |
| Beispiel 6 | Al-Grieß | 10 | 90 | 1950 |
| Beispiel 7 | Al-Grieß | 10 | 90 | 2050 |
| Beispiel 8 | Al-Grieß | 30 | 70 | 1600 |
| Beispiel 9 | Al-Grieß | 30 | 70 | 1950 |
| Beispiel 10 | Al-Grieß | 30 | 70 | 2050 |

(fortgesetzt)

| Beispiel Nr. | Bindephasen-Rohstoff Typ [Gew.-%] | Bindephasen-Rohstoffe Menge [Gew.-%] | Bornitrid-Primärpartikel (Ausgangspulver) *) [Gew.-%] | Nitridiertemperatur [°C] |
|---|---|---|---|---|
| Beispiel 11 | Al-Pyro | 5 | 95 | 1600 |
| Beispiel 12 | Al-Pyro | 10 | 90 | 1600 |
| Beispiel 13 | Al-Pyro | 10 | 90 | 1950 |
| Beispiel 14 | Al-Pyro | 10 | 90 | 2050 |
| Beispiel 15 | Al-Pyro | 30 | 70 | 1600 |
| Beispiel 16 | Al-Pyro | 30 | 70 | 1950 |
| Beispiel 17 | Al-Pyro | 30 | 70 | 2050 |
| Beispiel 18 | Alupor SK | 5 | 95 | 1950 |
| Beispiel 19 | Alupor SK | 10 | 90 | 1600 |
| Beispiel 20 | Alupor SK | 10 | 90 | 1950 |
| Beispiel 21 | Alupor SK | 10 | 90 | 2050 |
| Beispiel 22 | Alupor SK | 30 | 70 | 1600 |
| Beispiel 23 | Alupor SK | 30 | 70 | 1950 |
| Beispiel 24 | Alupor SK | 30 | 70 | 2050 |
| Beispiel 25 | $TiO_2$-Pulver | 10 | 90 | 1950 |
| Beispiel 26 | $TiB_2$-Pulver | 10 | 90 | 1950 |
| Beispiel 27 | Ti-Pulver | 10 | 90 | 1950 |
| Beispiel 28 | $TiO_2$-Pulver | 10 | 90 (BN amorph) | 1950 |
| Beispiel 29 | $TiB_2$-Pulver | 10 | 90 (BN amorph) | 1950 |
| Beispiel 30 | Ti-Pulver | 10 | 90 (BN amorph) | 1950 |
| Beispiel 31 | AlN-Pulver | 14 | 86 | 1950 |
| Beispiel 32 | Alupor SK | 45 | 55 | 1950 |
| Beispiel 33 | Alupor SK | 60 | 40 | 1950 |
| Beispiel 34 | Alupor SK | 75 | 25 | 1950 |
| Beispiel 35 | Alupor SK | 30 | 70 (BN mit dso = 12 $\mu$m) | 1950 |
| Vergleichsbeispiel 1 | - | 0 | 100 | 1600 |
| Vergleichsbeispiel 2 | - | 0 | 100 | 1950 |
| Vergleichsbeispiel 3 | - | 0 | 100 | 2050 |
| *) BORONID®-S1, wenn nicht anders angegeben (siehe Beschreibung der Beispiele). | | | | |

Tabelle 2:

| Beispiel Nr. | Agglomerate | | Agglomeratgröße dso [μm] | Agglomeratgröße d$_{90}$ [μm] | Agglomeratstabilität [%] | BN-Epoxid-Compound |
| | Bindephase | | | | | |
| | Phasen (röntgeno-grafisch) | Menge [Gew.-%, rechnerisch] | | | | WLF [W/m*K] |
| | | | | | | |
| | | | | | | |
| Beispiel 1 | AlN | 1,5 | 136 | 223 | 35 | 2,71 |
| Beispiel 2 | AlN | 7,4 | 150 | 227 | 70 | 2,58 |
| Beispiel 3 | AlN | 7,4 | 142 | 226 | 50 | 2,53 |
| Beispiel 4 | AlN | 7,4 | 147 | 240 | 60 | 2,61 |
| Beispiel 5 | AlN | 14,5 | 155 | 239 | 80 | 2,52 |
| Beispiel 6 | AlN | 14,5 | 141 | 241 | 70 | 2,52 |
| Beispiel 7 | AlN | 14,5 | 142 | 224 | 80 | 2,46 |
| Beispiel 8 | AlN | 39,5 | 167 | 259 | 100 | 2,04 |
| Beispiel 9 | AlN | 39,5 | 163 | 261 | 90 | 2,32 |
| Beispiel 10 | AlN | 39,5 | 148 | 238 | 95 | 2,65 |
| Beispiel 11 | AlN/Al$_8$O$_3$N$_6$ | 7,4 | 135 | 214 | 35 | 2,33 |
| Beispiel 12 | AlN/Al$_8$O$_3$N$_6$ | 14,5 | 141 | 226 | 70 | 2,46 |
| Beispiel 13 | AlN/Al$_8$O$_3$N$_6$ | 14,5 | 128 | 225 | 45 | 2,28 |
| Beispiel 14 | AlN/Al$_8$O$_3$N$_6$ | 14,5 | 135 | 236 | 50 | 2,63 |
| Beispiel 15 | AlN/Al$_8$O$_3$N$_6$ | 39,5 | 163 | 256 | 80 | 2,09 |
| Beispiel 16 | AlN/Al$_8$O$_3$N$_6$ | 39,5 | 134 | 267 | 90 | 2,26 |
| Beispiel 17 | AlN/Al$_8$O$_3$N$_6$ | 39,5 | 145 | 237 | 90 | 2,43 |
| Beispiel 18 | AlN | 7,4 | 121 | 211 | 40 | 2,72 |
| Beispiel 19 | AlN | 14,5 | 137 | 217 | 45 | 2,49 |
| Beispiel 20 | AlN | 14,5 | 134 | 229 | 45 | 2,65 |

| Beispiel Nr. | Agglomerate | | Agglomeratgröße dso [μm] | Agglomeratgröße d$_{90}$ [μm] | Agglomeratstabilität [%] | BN-Epoxid-Compound WLF [W/m*K] |
|---|---|---|---|---|---|---|
| | Bindephase | | | | | |
| | Phasen (röntgeno-grafisch) | Menge [Gew.-%, rechnerisch] | | | | |
| Beispiel 21 | AlN | 14,5 | 131 | 209 | 50 | 3,02 |
| Beispiel 22 | AlN | 39,5 | 150 | 254 | 80 | 2,50 |
| Beispiel 23 | AlN | 39,5 | 158 | 259 | 90 | 2,8 |
| Beispiel 24 | AlN | 39,5 | 147 | 245 | 80 | 3,20 |
| Beispiel 25 | TiN/TiB$_2$ | 8 | 183 | 293 | 80 | 3,74 |
| Beispiel 26 | TiN/TiB$_2$ | 9 | 175 | 280 | 95 | 2,97 |
| Beispiel 27 | TiN/TiB$_2$ | 13 | 174 | 279 | 75 | 3,56 |
| Beispiel 28 | TiN/TiB$_2$ | 8 | 166 | 260 | 65 | 2,25 |
| Beispiel 29 | TiN/TiB$_2$ | 9 | 170 | 268 | 70 | 2,78 |
| Beispiel 30 | TiN/TiB$_2$ | 13 | 170 | 269 | 70 | 2,7 |
| Beispiel 31 | AlN | 14 | 136 | 215 | 35 | 2,29 |
| Beispiel 32 | AlN | 55,4 | 180 | 292 | 95 | 1,90 |
| Beispiel 33 | AlN | 69,5 | 181 | 298 | 95 | 1,98 |
| Beispiel 34 | AlN | 82,0 | 171 | 271 | 100 | 1,72 |
| Beispiel 35 | AlN | 39,5 | 172 | 285 | 80 | 1,99 |
| Vergleichsbeispiel 1 | - | 0 | 141 | 223 | 20 | 2,02 |
| Vergleichsbeispiel 2 | - | 0 | 139 | 226 | 30 | 2,42 |
| Vergleichsbeispiel 3 | - | 0 | 144 | 233 | 25 | 2,58 |

**EP 2 847 129 B1**

**Patentansprüche**

1. Bornitrid-Agglomerate, umfassend hexagonale Bornitrid-Primärpartikel, wobei die hexagonalen Bornitrid-Primärpartikel miteinander mittels einer anorganischen Bindephase verbunden sind, und wobei die Bindephase wenigstens ein Nitrid und/oder Oxinitrid der Elemente Aluminium, Silizium und Titan umfasst.

2. Bornitrid-Agglomerate nach Anspruch 1, wobei die Bindephase eine oder mehrere der Verbindungen, ausgewählt aus der Gruppe bestehend aus Aluminiumnitrid, Aluminiumoxinitrid, Siliziumnitrid, Siliziumoxinitrid, Titannitrid und Sialon, umfasst.

3. Bornitrid-Agglomerate nach Anspruch 1 oder 2, wobei die Bindephase Aluminumnitrid und/oder Aluminumoxinitrid umfasst.

4. Bornitrid-Agglomerate nach einem der Ansprüche 1 bis 3, wobei die Bindephase weiterhin wenigstens ein Oxid ausgewählt aus der Gruppe bestehend aus Boroxid, Aluminiumoxid, Siliziumdioxid, Titandioxid, Yttriumoxid, Magnesiumoxid, Calciumoxid und Seltenerdmetalloxide, umfasst.

5. Bornitrid-Agglomerate nach einem der Ansprüche 1 bis 4, wobei der Anteil der Nitride und Oxinitride in der Bindephase wenigstens 50 Gew.-%, vorzugsweise wenigstens 80 Gew.-% beträgt, bezogen auf das Gesamtgewicht der Bindephase.

6. Bornitrid-Agglomerate nach einem der Ansprüche 1 bis 5, wobei die mittlere Agglomeratgröße ($d_{50}$) der Bornitrid-Agglomerate 1 mm und weniger, vorzugsweise 500 $\mu$m und weniger, weiter bevorzugt 300 $\mu$m und weniger und besonders bevorzugt 200 $\mu$m und weniger beträgt.

7. Bornitrid-Agglomerate nach einem der Ansprüche 1 bis 6, wobei der Anteil der Bindephase wenigstens 1 Gew.-%, weiter vorzugsweise wenigstens 5 Gew.-% und besonders bevorzugt wenigstens 10 Gew.-% beträgt, bezogen auf das Gesamtgewicht der Bornitrid-Agglomerate.

8. Bornitrid-Agglomerate nach einem der Ansprüche 1 bis 7, wobei der Anteil der Bindephase nicht mehr als 60 Gew.-%, vorzugsweise nicht mehr als 50 Gew.-% beträgt, bezogen auf das Gesamtgewicht der Bornitrid-Agglomerate.

9. Verfahren zur Herstellung von Bornitrid-Agglomeraten gemäß mindestens einem der Ansprüche 1 bis 8, wobei Bornitrid-Ausgangspulver in Form von Bornitrid-Primärpartikeln mit Bindephasen-Rohstoffen vermischt, zu Granulaten oder Formkörpern verarbeitet und diese anschließend einer Temperaturbehandlung bei einer Temperatur von mindestens 1000 °C in einer Nitridieratmosphäre unterzogen und die erhaltenen Granulate oder Formkörper gegebenenfalls zerkleinert und/oder fraktioniert werden.

10. Verfahren zur Herstellung von Bornitrid-Agglomeraten nach Anspruch 9, wobei die mittlere Partikelgröße $d_{50}$ des Bornitrid-Ausgangspulvers 0.5-50 $\mu$m, vorzugsweise 0.5-15 $\mu$m, weiter vorzugsweise 0.5-5 $\mu$m, beträgt.

11. Verfahren zur Herstellung von Bornitrid-Agglomeraten nach Anspruch 9 oder 10, wobei als Bindephasen-Rohstoffe zur Erzeugung der Bindephase Metallpulver eingesetzt werden, ausgewählt aus der Gruppe umfassend Aluminium, Silizium, Titan und Mischungen davon.

12. Verfahren zur Herstellung von Bornitrid-Agglomeraten nach einem der Ansprüche 9 bis 11, wobei als Bindephasen-Rohstoffe zur Erzeugung der Bindephase Metallverbindungen in Kombination mit Reduktionsmitteln eingesetzt werden, wobei als Metallverbindungen vorzugsweise Oxide und/oder Hydroxide eingesetzt werden.

13. Polymer-Bornitrid-Verbundwerkstoff, umfassend Bornitrid-Agglomerate gemäß mindestens einem der Ansprüche 1 bis 8.

14. Verwendung von Bornitrid-Agglomeraten gemäß mindestens einem der Ansprüche 1 bis 8 zur Herstellung von Polymer-Bornitrid-Verbundwerkstoffen.

21

**Claims**

1. Boron nitride agglomerates comprising hexagonal boron nitride primary particles, wherein the hexagonal boron nitride primary particles are joined to one another by means of an inorganic binding phase, and wherein the binding phase comprises at least one nitride and/or oxynitride of the elements aluminum, silicon, and titanium.

2. Boron nitride agglomerates according to claim 1, wherein the binding phase comprises one or more of the compounds selected from the group made up of aluminum nitride, aluminum oxynitride, silicon nitride, silicon oxynitride, titanium nitride, and sialon.

3. Boron nitride agglomerates according to claim 1 or 2, wherein the binding phase comprises aluminum nitride and/or aluminum oxynitride.

4. Boron nitride agglomerates according to any of claims 1 to 3, wherein the binding phase furthermore comprises at least one oxide selected from the group made up of boron oxide, aluminum oxide, silicon dioxide, titanium dioxide, yttrium oxide, magnesium oxide, calcium oxide, and rare earth metal oxides.

5. Boron nitride agglomerates according to any of claims 1 to 4, wherein the proportion of the nitrides and oxynitrides in the binding phase is at least 50 wt.%, preferably at least 80 wt.%, relative to the total weight of the binding phase.

6. Boron nitride agglomerates according to any of claims 1 to 5, wherein the mean agglomerate size (dso) of the boron nitride agglomerates is 1 mm or less, preferably 500 $\mu$m or less, more preferably 300 $\mu$m or less, and especially preferably 200 $\mu$m or less.

7. Boron nitride agglomerates according to any of claims 1 to 6, wherein the proportion of the binding phase is at least 1 wt.%, more preferably at least 5 wt.% and especially preferably at least 10 wt.%, relative to the total weight of the boron nitride agglomerates.

8. Boron nitride agglomerates according to any of claims 1 to 7, wherein the proportion of the binding phase is no more than 60 wt.%, preferably no more than 50 wt.%, relative to the total weight of the boron nitride agglomerates.

9. Method for producing boron nitride agglomerates according to at least one of claims 1 to 8, wherein boron nitride starting powder in the form of boron nitride primary particles is mixed with binding phase raw materials, processed into granules or molded bodies, and these are subsequently subjected to a temperature treatment at a temperature of at least 1000 °C in a nitriding atmosphere, and the resulting granules or molded bodies are optionally comminuted and/or fractionated.

10. Method for producing boron nitride agglomerates according to claim 9, wherein the mean particle size dso of the boron nitride starting powder is 0.5-50 $\mu$m, preferably 0.5-15 $\mu$m, more preferably 0.5-5 $\mu$m.

11. Method for producing boron nitride agglomerates according to claim 9 or 10, wherein metal powders selected from the group comprising aluminum, silicon, titanium, and mixtures thereof are used as binding phase raw materials used for producing the binding phase.

12. Method for producing boron nitride agglomerates according to any of claims 9 to 11, wherein metal compounds in combination with reducing agents are used as binding phase raw materials used for producing the binding phase, wherein oxides and/or hydroxides are preferably used as metal compounds.

13. Polymer-boron nitride composite material comprising boron nitride agglomerates according to at least one of claims 1 to 8.

14. Use of boron nitride agglomerates according to at least one of claims 1 to 8 for producing polymer-boron nitride composite materials.

**Revendications**

1. Agglomérats de nitrure de bore, comprenant des particules primaires hexagonales de nitrure de bore, les particules primaires hexagonales de nitrure de bore étant liées les unes aux autres au moyen d'une phase liante inorganique et la phase liante comprenant au moins un nitrure et/ou oxynitrure des éléments aluminium, silicium et titane.

2. Agglomérats de nitrure de bore selon la revendication 1, la phase liante comprenant un ou plusieurs des composés, choisis dans le groupe constitué de nitrure d'aluminium, d'oxynitrure d'aluminium, de nitrure de silicium, d'oxynitrure de silicium, de nitrure de titane et de sialon.

3. Agglomérats de nitrure de bore selon la revendication 1 ou 2, la phase liante comprenant du nitrure d'aluminium et/ou de l'oxynitrure d'aluminium.

4. Agglomérats de nitrure de bore selon une quelconque des revendications 1 à 3, la phase liante comprenant en outre au moins un oxyde choisi dans le groupe constitué de l'oxyde de bore, l'oxyde d'aluminium, le dioxyde de silicium, le dioxyde de titane, l'oxyde d'yttrium, l'oxyde de magnésium, l'oxyde de calcium et l'oxyde de métal des terres rares.

5. Agglomérats de nitrure de bore selon une quelconque des revendications 1 à 4, la proportion de nitrure et d'oxynitrure dans la phase liante représentant au moins 50 % en poids, de préférence au moins 80 % en poids, par rapport au poids total de la phase liante.

6. Agglomérats de nitrure de bore selon une quelconque des revendications 1 à 5, la taille moyenne d'agglomérat (dso) des agglomérats de nitrure de bore étant de 1 mm et moins, de préférence de 500 $\mu$m et moins, de manière plus préférée de 300 $\mu$m et moins et de manière particulièrement préférée de 200 $\mu$m et moins.

7. Agglomérats de nitrure de bore selon une quelconque des revendications 1 à 6, la proportion de phase liante étant d'au moins 1 % en poids, de préférence encore d'au moins 5 % en poids et de manière particulièrement préférée d'au moins 10 % en poids, par rapport au poids total des agglomérats de nitrure de bore.

8. Agglomérats de nitrure de bore selon une quelconque des revendications 1 à 7, la proportion de phase liante ne représentant pas plus de 60 % en poids, de préférence pas plus de 50 % en poids, par rapport au poids total des agglomérats de nitrure de bore.

9. Procédé de production d'agglomérats de nitrure de bore selon au moins une des revendications 1 à 8, de la poudre de nitrure de bore de départ sous forme de particules primaires de nitrure de bore étant mélangée à des matières premières jouant le rôle de phase liante, puis transformée en granulats ou corps moulés, qui sont ensuite soumis à un traitement thermique à une température d'au moins 1000 °C dans une atmosphère de nitruration et les granulats ou corps moulés obtenus étant éventuellement broyés et/ou fractionnés.

10. Procédé de production d'agglomérats de nitrure de bore selon la revendication 9, la taille moyenne de particule dso de la poudre de nitrure de bore de départ étant de 0,5-50 $\mu$m, de préférence de 0,5-15 $\mu$m, de manière plus préférée de 0,5-5 $\mu$m.

11. Procédé de production d'agglomérats de nitrure de bore selon la revendication 9 ou 10, de la poudre métallique étant utilisée comme matières premières jouant le rôle de phase liante pour la production de la phase liante, choisie dans le groupe comprenant l'aluminium, le silicium, le titane et leurs mélanges.

12. Procédé de production d'agglomérats de nitrure de bore selon une quelconque des revendications 9 à 11, des composés métalliques en association avec des moyens de réduction étant utilisés comme matières premières jouant le rôle de phase liante pour la production de la phase liante, de préférence de l'oxyde et/ou de l'hydroxyde étant utilisés comme composés métalliques.

13. Matériau composite de polymère et nitrure de bore comprenant des agglomérats de nitrure de bore selon au moins une des revendications 1 à 8.

14. Utilisation d'agglomérats de nitrure de bore selon au moins une des revendications 1 à 8 pour la production de matériaux composites de polymère et nitrure de bore.

Figur 1

Figur 2

Figur 3

40946                                                                                               2012-03-09

Figur 4a

100µm                    Elektronenbild 1

Figur 4b

Figur 4c

Al Ka1

Figur 5a

Figur 5b

100μm        Elektronenbild 1

Figur 5c

Al Ka1

Figur 6a                                                          Figur 6b

Abb. 1: Links: REM-Bild eines Agglomerats

Figur 6c

Al Ka1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060127422 A1
- WO 03013845 A1
- US 6048511 A
- EP 0939066 A1
- US 20020006373 A1

- US 20040208812 A1
- WO 2005021428 A1
- US 5854155 A
- US 6096671 A

**In der Beschreibung aufgeführte Nicht-Patentliteratur**

- Emerging packaging Technologies. **R. F. HILL.** SM-TA National Symposium. Research Triangle Park, 18. November 1996